# EUROPEAN PATENT APPLICATION

(11) **EP 4 737 521 A1**
(43) Date of publication of application: **06.05.2026**
(21) Application number: 24306831.9
(22) Date of filing: 31.10.2024
(51) Int. Cl.: C09B 55/00, C09B 57/10

(54) **AZA-METAL-DIPYRROMETHENE DERIVATIVES, PROCESSES OF PRODUCTION AND USES THEREOF AS PHOTOCATALYSTS**

(71) Applicant: Centre National de la Recherche Scientifique, 75016 Paris (FR); Université de Bourgogne, 21000 Dijon (FR)
(72) Inventor: BEILLARD, Audrey, 21000 DIJON (FR); BODIO, Ewen, 21480 Varois et Chaignot (FR); GODARD, Amélie, 21000 Dijon (FR); CAVE, Charlotte, 21000 Dijon (FR)
(74) Representative: Gevers & Orès

(57) **Abstract**

The present invention concerns aza-metal-dipyrromethene derivatives, processes of production and uses thereof in photocatalysis.

## Description

The present invention concerns aza-metal-dipyrromethene derivatives, processes of production and uses thereof in photocatalysis.

Photocatalysis is a process that uses light to accelerate a chemical reaction in the presence of a catalyst. This method is for example significant in environmental and energy applications.

One of the primary advantages of photocatalysis is its environmental friendliness. It can for example degrade a wide variety of pollutants, including organic compounds, dyes, without producing harmful by-products. This makes it an excellent choice for wastewater treatment and air purification. Additionally, photocatalysis operates under mild conditions, typically at room temperature and atmospheric pressure, which reduces energy consumption and operational costs. And photocatalysis can also be used to carry out organic synthesis and therefore produce high-value-added molecules.

Overall, photocatalysis stands out for its versatility, efficiency, and sustainability.

At present, most of the used photocatalysts require activation by high-energy light irradiation (i.e. short wavelengths corresponding to the ultra-violet, violet and blue ranges). However, such irradiation has extremely low penetration of the reaction media (a few millimetres at most) and severely limits the dimensions of the synthesis reactors that can be used. In addition, this highly energetic radiation can cause damage to the reaction medium and even to the photocatalyst itself.

There are a few examples of molecules or complexes that absorb in the red and/or NIR and are used as photocatalysts (for instance osmium complexes and organic catalysts). However, their stability, photostability and/or molar absorption coefficient are relatively limited in the red and even more so in the NIR.

Accordingly, it is an object of the present invention to provide compounds that absorb intensely in the red and/or near infrared (NIR). Indeed, it has been underlined, for example, that going from a wavelength of 450 mm (blue) to 750 mm (the NIR range) can increase the photocatalysis reaction volume by a factor of 250 with increase of yield. This responds to the various issues involved in scaling up photocatalysis reactions. In addition, NIR radiation has a very low risk of damaging the reaction medium (e.g. use in medical imaging), even in case of a sensitive one.

Another goal of the present invention is to provide complexes exhibiting intense absorptions that can exceed 60,000; 70,000 or 100,000 M⁻¹cm⁻¹ at wavelengths ranging from 680 to over 810 mm. These exceptional absorbances achieved by the compounds of the invention promote excellent activity at long wavelengths, even over short periods of time. By way of comparison, osmium complexes of the prior art have an absorbance more than 200 times lower at 740 mm and zero at 800 mm.

Another goal of the present invention is to provide complexes that are tunable in terms of working wavelength, and therefore adjustable to the aimed reactor volume and material (lamp wavelength), but also in terms of the redox potential value (to adapt to the nature of the chemical reaction to catalyse), solubility and whether the catalysis is homogeneous or supported.

Another goal of the present invention is to provide complexes resistant to photobleaching, which means they can be irradiated for prolonged periods without any risk of damage or degradation. This advantage is key to recycle the photocatalyst without loss of activity.

The present invention thus relates to a compound of following formula (I): 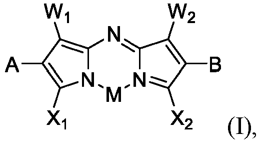 wherein:
M is a metal chosen from transition metals, post-transition metals and lanthanides, M being different from bore; A and B are independently chosen from:
   - H,
   - halogens, in particular F, Cl, Br and I,
   - CF₃,
   - linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
   - linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
   - linear, branched and cyclic (C₂-C₁₂)-alkenyl groups, OR, wherein R is chosen from hydrogen, linear, branched and cyclic (C₁-C₁₂)-alkyl groups, in particular Me, and (hetero)aryl groups, in particular phenyl,
   - NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
   - Aryl and heteroaryl groups, said groups being optionally substituted by at least one R₁ group chosen from:
      ∘ halogens, in particular F, Cl, Br and I,
      ∘ CF₃,
      ∘ N₃,
      ∘ OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ COO⁻ and COOR, wherein R is chosen from hydrogen, linear, branched and cyclic (C₁-C₁₂)-alkyl groups, and (hetero)aryl groups, in particular phenyl,
      ∘ P⁺RₐR_{b}R_{c}, P(=O)(ORₐ)(OR_{b}), P(=O)(ORₐ)(O⁻), and PO₃²⁻, wherein Rₐ, R_{b} and R_{c} are independently chosen from hydrogen, linear, branched and cyclic (C₁-C₁₂)-alkyl groups, and (hetero)aryl groups, in particular phenyl,
      ∘ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
      ∘ SO₃H or SO₃⁻;
W₁ and W₂ are independently chosen from:
   - linear, branched and cyclic (C₁-C₁₂)-alkyl groups, in particular Me,
   - linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
   - linear, branched and cyclic (C₂-C₁₂)-alkenyl groups, Aryl and heteroaryl groups, said groups being optionally substituted by at least one R₁ group chosen from:
      ∘ linear, branched and cyclic (C₁-C₁₂)-alkyl groups,
      ∘ halogens, in particular F, Cl, Br and I,
      ∘ CF₃,
      ∘ N₃,
      ∘ OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ C≡CRₐ, wherein Rₐ is chosen from hydrogen, linear, branched and cyclic (C₁-C₁₂)-alkyl groups, and (hetero)aryl groups, in particular phenyl,
      ∘ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
      ∘ PRₐR_{b} wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
      ∘ COO⁻ and COOH,
      ∘ OH and O⁻,
      ∘ SO₃H or SO₃⁻,
      ∘ CH₂-E, said group being in particular a phenyl group, more particularly a phenyl substituted by a R₁ group in para, wherein E is a group chosen from:
         ▪ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
         ▪ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
         ▪ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
         ▪ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
         ▪ C≡CRₐ, wherein Rₐ is chosen from hydrogen, linear, branched and cyclic (C₁-C₁₂)-alkyl groups, and (hetero)aryl groups, in particular phenyl,
         ▪ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
         ▪ PRₐR_{b} wherein Rₐ and R_{b} are independently chosen from hydrogen, linear, branched and cyclic (C₁-C₁₂)-alkyl groups, and (hetero)aryl groups, in particular phenyl,
         ▪ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
         ▪ COO⁻ and COOH,
         ▪ OH and O⁻,
         ▪ SO₃H or SO₃⁻,
   said optionally substituted heteroaryl being for example a pyridinium;
X₁ and X₂ are independently chosen from;
   - Aryl groups,
   - Aryl groups being substituted, in particular at least in ortho or meta, by at least one R₂ group chosen from:
      ∘ OH or O⁻ group,
      ∘ C≡CRₐ, wherein Rₐ is chosen from hydrogen, linear, branched and cyclic (C₁-C₁₂)-alkyl groups, and (hetero)aryl groups, in particular phenyl,
      ∘ CF₃,
      ∘ N₃,
         OR, wherein R is chosen from linear, branched and cyclic (C₁-C₁₂)-alkyl groups, in particular Me, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ SH or S⁻ group,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ COO⁻ and COOR, wherein R is chosen from hydrogen, linear, branched and cyclic (C₁-C₁₂)-alkyl groups, and (hetero)aryl groups, in particular phenyl, R being in particular hydrogen,
      ∘ CONRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ PRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ CH=N-NH₂, and CH=N-NHR', wherein R' is chosen from linear, branched and cyclic (C₁-C₁₂)-alkyl groups, C(=S)NH₂ and C(=O)NH₂,
      ∘ SO₃H or SO₃⁻,
   - Heteroaryl groups, for example pyridine, pyrrole, thiazole, triazole, imidazole or thiophene, being optionally substituted, in particular at least in alpha or beta with the carbon of X₁ or X₂ that is bound to the rest of the compound of formula (I), by at least one R₂ group chosen from:
      ∘ linear, branched and cyclic (C₁-C₁₂)-alkyl groups,
      ∘ OH or O⁻ group,
      ∘ C≡CRₐ, wherein Rₐ is chosen from hydrogen, linear, branched and cyclic (C₁-C₁₂)-alkyl groups, and (hetero)aryl groups, in particular phenyl,
      ∘ CF₃,
      ∘ N₃,
      ∘ OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ SH or S⁻ group,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ COO⁻ and COOR, wherein R is chosen from hydrogen, linear, branched and cyclic (C₁-C₁₂)-alkyl groups, and (hetero)aryl groups, in particular phenyl, R being in particular hydrogen,
      ∘ CH₂-COO⁻ and CH₂-COOR, wherein R is chosen from hydrogen, linear, branched and cyclic (C₁-C₁₂)-alkyl groups, and (hetero)aryl groups, in particular phenyl, R being in particular hydrogen, said group being for example pyrrolyl being N-substituted by CH₂-COO⁻ or CH₂-COOH,
      ∘ PRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ CH=N-NH₂, and CH=N-NHR', wherein R' is chosen from linear, branched and cyclic (C₁-C₁₂)-alkyl groups, C(=S)NH₂ and C(=O)NH₂,
      ∘ SO₃H or SO₃⁻,

      said optionally substituted heteroaryl being for example a pyridinium,
      said heteroaryl groups being in particular heteroaryl groups, more particularly unsubstituted heteroaryl groups, comprising at least one N, O or S atom which is in alpha with the carbon of X₁ or X₂ that is bound to the rest of the compound of formula (I), said heteroaryl being for example a 2-pyridyl group,
   - C(Q₁)(Q₂)-Q, wherein:
      ∘ Q is (CH₂)ₙ-Q', wherein n is 0, 1 or 2, and Q' is chosen from X₁ as defined above, in particular pyridinyl, C(=O)H, C(=O)Rₐ, COORₐ and CONRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ Q₁ and Q₂ are chosen from linear, branched and cyclic (C₁-C₁₂)-alkyl groups, aryl groups, halogens, in particular F, and Q as defined above, at least one of Q₁ and Q₂ being chosen from linear, branched and cyclic (C₁-C₁₂)-alkyl groups, aryl groups, and halogens, in particular F,
or A and W₁, and/or B and W₂ form together a fused arene, in particular a fused benzene, said arene being optionally substituted as defined above about W₁ and/or W₂,
or A and X₁, and/or B and X₂ form together a fused arene, in particular a fused phenanthrene, said arene being optionally substituted as defined above about X₁ and/or X₂,
with the proviso that:
   - At least one of X₁ and X₂ is a substituted aryl at least in ortho by at least one R₂ group as defined above, or a heteroaryl group comprising at least one N, O or S atom which is adjacent to the carbon of X₁ or X₂ that is bound to the rest of the compound of formula (I), and
   - When X₁ and X₂ are both 2-pyrrolyl, 2-thiophenyl, or 5-oxazolyl, at least one of W₁ and W₂ is not alkyl;
said compound of formula (I) being different from: 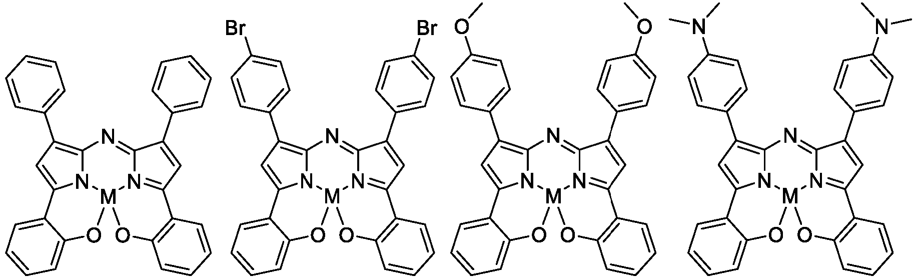
with M being Al or Ga; 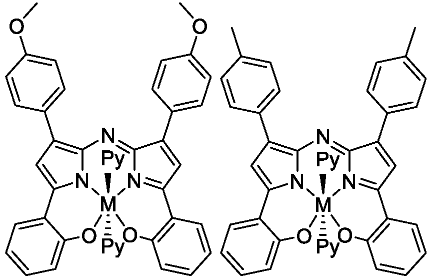
with M being Al, Ga or In,
   and

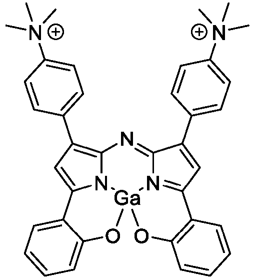

By compound of the invention is also meant any contributing structure (also known as resonance structure) of the compound of formula (I) as defined above.

And wherein the coordination sphere of M is optionally completed with one or more ligands, for example a solvent molecule, notably chosen from pyridine, water, methanol, ethanol, tetrahydrofuran (THF), ..., or another compound of formula (I).

In a particular embodiment, none of the A, B, W₁, W₂, X₁ and X₂ groups represents a linear, branched and cyclic (C₂-C₁₂)-alkenyl groups.

In a particular embodiment, A and B are H.

In a particular embodiment, W₁ and W₂ are independently chosen from aryl and heteroaryl groups, said groups being optionally substituted by at least one R₁ as defined above, in particular at least in para position.

In a particular embodiment, W₁ and W₂ are chosen from aryl, notably phenyl, optionally substituted by at least one R₁ as defined above, in particular at least in para position.

In a particular embodiment, W₁ and W₂ are chosen from aryl, notably phenyl, substituted by at least one R₁ as defined above, in particular at least in para position.

In a particular embodiment, W₁ and W₂ are chosen from heteroaryl optionally substituted by at least one R₁ as defined above, in particular at least in para position.

In a particular embodiment, X₁ and X₂ are independently chosen from aryl groups being substituted, at least in ortho, by at least one R₂ group as defined above, and heteroaryl groups optionally substituted as defined above, comprising at least one N, O or S atom which is adjacent to the carbon of X₁ or X₂ that is bound to the rest of the compound of formula (I), said heteroaryl being for example a 2-pyridyl group.

In this case, the N, O or S atom and/or the R₂ group may play the role of a chelate of the metal M.

In a particular embodiment, X₁ or X₂ is chosen from aryl groups being substituted, at least in ortho, by at least one R₂ group as defined above, and heteroaryl groups optionally substituted as defined above, comprising at least one N, O or S atom which is adjacent to the carbon of X₁ or X₂ that is bound to the rest of the compound of formula (I), said heteroaryl being for example a 2-pyridyl group,
the other of X₁ and X₂ being in particular a aryl group.

In this case, the N, O or S atom or the R₂ group may play the role of a chelate of the metal M.

In a particular embodiment, X₁ and X₂ are chosen from aryl groups being substituted, at least in ortho, by at least one R₂ group as defined above.

In this case, the R₂ group may play the role of a chelate of the metal M.

In a particular embodiment, X₁ and X₂ are chosen from heteroaryl groups optionally substituted as defined above, comprising at least one N, O or S atom which is adjacent to the carbon of X₁ or X₂ that is bound to the rest of the compound of formula (I), said heteroaryl being for example a 2-pyridyl group.

In this case, the N, O or S atom may play the role of a chelate of the metal M.

In a particular embodiment, one of X₁ and X₂ is chosen from aryl groups being substituted, at least in ortho, by at least one R₂ group as defined above, and the other one of X₁ and X₂ is chosen from heteroaryl groups optionally substituted as defined above, comprising at least one N, O or S atom which is adjacent to the carbon of X₁ or X₂ that is bound to the rest of the compound of formula (I), said heteroaryl being for example a 2-pyridyl group.

In this case, the N, O or S atom and the R₂ group may play the role of a chelate of the metal M.

In another aspect, the invention also concerns a compound of following formula (I): 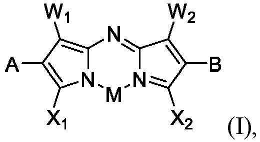 wherein:
M is a metal chosen from Cu, Ni, Co, Pd, Ir, Ru, Ti, In, Au, Fe, Os, Pt, W and Mn;
or A and W₁, and/or B and W₂ form together a fused arene, in particular a fused benzene, said arene being optionally substituted by at least one group chosen from...
or A and X₁, and/or B and X₂ form together a fused arene, in particular a fused phenanthrene, said arene being optionally substituted by at least one group chosen from...
A and B are independently chosen from:
   - H,
   - halogens, in particular F, Cl, Br and I,
   - CF₃,
   - linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
   - linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
   - linear, branched and cyclic (C₂-C₁₂)-alkenyl groups, OR, wherein R is chosen from hydrogen, linear, branched and cyclic (C₁-C₁₂)-alkyl groups, in particular Me, and (hetero)aryl groups, in particular phenyl,
   - NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
   - Aryl and heteroaryl groups, said groups being optionally substituted by at least one R₁ group chosen from:
      ∘ halogens, in particular F, Cl, Br and I,
      ∘ CF₃,
      ∘ N₃,
      ∘ OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ∘ COO⁻ and COOR, wherein R is chosen from hydrogen, linear, branched and cyclic (C₁-C₁₂)-alkyl groups, and (hetero)aryl groups, in particular phenyl,
      ∘ P⁺RₐR_{b}R_{c}, P(=O)(ORₐ)(OR_{b}), P(=O)(ORₐ)(O⁻), and PO₃²⁻, wherein Rₐ, R_{b} and R_{c} are independently chosen from hydrogen, linear, branched and cyclic (C₁-C₁₂)-alkyl groups, and (hetero)aryl groups, in particular phenyl,
      ∘ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
      ∘ SO₃H or SO₃⁻;
W₁ and W₂ are independently chosen from:
   - linear, branched and cyclic (C₁-C₁₂)-alkyl groups, in particular Me,
   - linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
   - linear, branched and cyclic (C₂-C₁₂)-alkenyl groups, Aryl and heteroaryl groups, said groups being optionally substituted by at least one R₁ group chosen from:
      ∘ linear, branched and cyclic (C₁-C₁₂)-alkyl groups,
      ∘ halogens, in particular F, Cl, Br and I,
      ∘ CF₃,
      ∘ N₃,
      ∘ OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ C≡CRₐ, wherein Rₐ is chosen from hydrogen, linear, branched and cyclic (C₁-C₁₂)-alkyl groups, and (hetero)aryl groups, in particular phenyl,
      ∘ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
      ∘ PRₐR_{b} wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
      ∘ COO⁻ and COOH,
      ∘ OH and O⁻,
      ∘ SO₃H or SO₃⁻,
      ∘ CH₂-E, said group being in particular a phenyl group, more particularly a phenyl substituted by a R₁ group in para, wherein E is a group chosen from:
         ▪ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
         ▪ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
         ▪ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
         ▪ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
         ▪ C≡CRₐ, wherein Rₐ is chosen from hydrogen, linear, branched and cyclic (C₁-C₁₂)-alkyl groups, and (hetero)aryl groups, in particular phenyl,
         ▪ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
         ▪ PRₐR_{b} wherein Rₐ and R_{b} are independently chosen from hydrogen, linear, branched and cyclic (C₁-C₁₂)-alkyl groups, and (hetero)aryl groups, in particular phenyl,
         ▪ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
         ▪ COO⁻ and COOH,
         ▪ OH and O⁻,
         ▪ SO₃H or SO₃⁻,
   said optionally substituted heteroaryl being for example a pyridinium;
X₁ and X₂ are independently chosen from;
   - Aryl groups,
   - Aryl groups being substituted, in particular at least in ortho or meta, by at least one R₂ group chosen from:
      ∘ OH or O⁻ group,
      ∘ C≡CRₐ, wherein Rₐ is chosen from hydrogen, linear, branched and cyclic (C₁-C₁₂)-alkyl groups, and (hetero)aryl groups, in particular phenyl,
      ∘ CF₃,
      ∘ N₃,
      ∘ OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ SH or S⁻ group,
      ∘ NH₂ group
      ∘ COO⁻ and COOR, wherein R is chosen from hydrogen, linear, branched and cyclic (C₁-C₁₂)-alkyl groups, and (hetero)aryl groups, in particular phenyl, R being in particular hydrogen,
      ∘ CONRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ PRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ CH=N-NH₂, and CH=N-NHR', wherein R' is chosen from linear, branched and cyclic (C₁-C₁₂)-alkyl groups, C(=S)NH₂ and C(=O)NH₂,
      ∘ SO₃H or SO₃⁻,
   - Heteroaryl groups, for example pyridine, pyrrole, thiazole, triazole, imidazole or thiophene, being optionally substituted, in particular at least in alpha or beta with the carbon of X₁ or X₂ that is bound to the rest of the compound of formula (I), by at least one R₂ group chosen from:
      ∘ linear, branched and cyclic (C₁-C₁₂)-alkyl groups,
      ∘ OH or O⁻ group,
      ∘ SH or S⁻ group,
      ∘ NH₂ group and NRaRb
      ∘ COO⁻ and COOR, wherein R is chosen from hydrogen, linear, branched and cyclic (C₁-C₁₂)-alkyl groups, and (hetero)aryl groups, in particular phenyl, R being in particular hydrogen,
      ∘ CH₂-COO⁻ and CH₂-COOR, wherein R is chosen from hydrogen, linear, branched and cyclic (C₁-C₁₂)-alkyl groups, and (hetero)aryl groups, in particular phenyl, R being in particular hydrogen, said group being for example pyrrolyl being N-substituted by CH₂-COO^{- or} CH₂-COOH,
      ∘ Phosphines,

      said optionally substituted heteroaryl being for example a pyridinium,
      said heteroaryl groups being in particular heteroaryl groups, more particularly unsubstituted heteroaryl groups, comprising at least one N, O or S atom which is in alpha with the carbon of X₁ or X₂ that is bound to the rest of the compound of formula (I), said heteroaryl being for example a 2-pyridyl group,
   - C(Q₁)(Q₂)-Q, wherein:
      ∘ Q is (CH₂)ₙ-Q', wherein n is 0, 1 or 2, and Q' is chosen from X₁ as defined above, in particular pyridinyl, C(=O)H, C(=O)Rₐ, COORₐ and CONRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ Q₁ and Q₂ are chosen from linear, branched and cyclic (C₁-C₁₂)-alkyl groups, aryl groups, halogens, in particular F, and Q as defined above, at least one of Q₁ and Q₂ being chosen from linear, branched and cyclic (C₁-C₁₂)-alkyl groups, aryl groups, and halogens, in particular F,

With the proviso that:
At least one of W₁ and W₂ is chosen from aryl groups, in particular phenyl, said groups being substituted by at least one R₁ group chosen from:
   ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
   ∘ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
   ∘ CH₂-E, said group being in particular a phenyl group, more particularly a phenyl substituted by a R₁ group in para, wherein E is a group chosen from:
      ▪ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ▪ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ▪ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ▪ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ▪ C≡CRₐ, wherein Rₐ is chosen from hydrogen, linear, branched and cyclic (C₁-C₁₂)-alkyl groups, and (hetero)aryl groups, in particular phenyl,
      ▪ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
      ▪ PRₐR_{b} wherein Rₐ and R_{b} are independently chosen from hydrogen, linear, branched and cyclic (C₁-C₁₂)-alkyl groups, and (hetero)aryl groups, in particular phenyl,
      ▪ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
      ▪ COO⁻ and COOH,
      ▪ OH or O^{-,}
      ▪ SO₃H or SO₃⁻,
   And/or
At least one of X₁ and X₂ is chosen from;
   - Aryl groups being substituted, in particular at least in ortho or meta, by at least one R₂ group chosen from:
      ∘ NH₂ group
      ∘ COO⁻ and COOR, wherein R is chosen from hydrogen, linear, branched and cyclic (C₁-C₁₂)-alkyl groups, and (hetero)aryl groups, in particular phenyl, R being in particular hydrogen,
      ∘ CONRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ PRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ CH=N-NH₂, and CH=N-NHR', wherein R' is chosen from linear, branched and cyclic (C₁-C₁₂)-alkyl groups, C(=S)NH₂ and C(=O)NH₂,
      ∘ SO₃H or SO₃⁻.

In another aspect, the invention also concerns a compound of following formula (I): 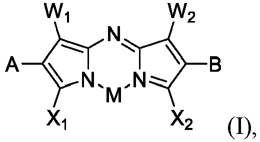 wherein:
M is a metal chosen from transition metals, post-transition metals and lanthanides, M being different from bore, M being in particular chosen from Cu, Ni, Co, Pd, Ir, Ru, Ti, In, Au, Fe, Os, Pt, W and Mn;
or A and W₁, and/or B and W₂ form together a fused arene, in particular a fused benzene, said arene being optionally substituted by at least one group chosen from...
or A and X₁, and/or B and X₂ form together a fused arene, in particular a fused phenanthrene, said arene being optionally substituted by at least one group chosen from...
A and B are independently chosen from:
   - H,
   - halogens, in particular F, Cl, Br and I,
   - CF₃,
   - linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
   - linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
   - linear, branched and cyclic (C₂-C₁₂)-alkenyl groups, OR, wherein R is chosen from hydrogen, linear, branched and cyclic (C₁-C₁₂)-alkyl groups, in particular Me, and (hetero)aryl groups, in particular phenyl,
   - NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
   - Aryl and heteroaryl groups, said groups being optionally substituted by at least one R₁ group chosen from:
      ∘ halogens, in particular F, Cl, Br and I,
      ∘ CF₃,
      ∘ N₃,
      ∘ OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ∘ COO⁻ and COOR, wherein R is chosen from hydrogen, linear, branched and cyclic (C₁-C₁₂)-alkyl groups, and (hetero)aryl groups, in particular phenyl,
      ∘ P⁺RₐR_{b}R_{c}, P(=O)(ORₐ)(OR_{b}), P(=O)(ORₐ)(O⁻), and PO₃²⁻, wherein Rₐ, R_{b} and R_{c} are independently chosen from hydrogen, linear, branched and cyclic (C₁-C₁₂)-alkyl groups, and (hetero)aryl groups, in particular phenyl,
      ∘ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
      ∘ SO₃H or SO₃⁻;
W₁ and W₂ are independently chosen from:
   - linear, branched and cyclic (C₁-C₁₂)-alkyl groups, in particular Me,
   - linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
   - linear, branched and cyclic (C₂-C₁₂)-alkenyl groups, Aryl and heteroaryl groups, said groups being optionally substituted by at least one R₁ group chosen from:
      ∘ linear, branched and cyclic (C₁-C₁₂)-alkyl groups,
      ∘ halogens, in particular F, Cl, Br and I,
      ∘ CF₃,
      ∘ N₃,
      ∘ OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ C≡CRₐ, wherein Rₐ is chosen from hydrogen, linear, branched and cyclic (C₁-C₁₂)-alkyl groups, and (hetero)aryl groups, in particular phenyl,
      ∘ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
      ∘ PRₐR_{b} wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
      ∘ COO⁻ and COOH,
      ∘ OH or O⁻,
      ∘ SO₃H or SO₃⁻,
      ∘ CH₂-E, said group being in particular a phenyl group, more particularly a phenyl substituted by a R₁ group in para, wherein E is a group chosen from:
         ▪ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
         ▪ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
         ▪ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
         ▪ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
         ▪ C≡CRₐ, wherein Rₐ is chosen from hydrogen, linear, branched and cyclic (C₁-C₁₂)-alkyl groups, and (hetero)aryl groups, in particular phenyl,
         ▪ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
         ▪ PRₐR_{b} wherein Rₐ and R_{b} are independently chosen from hydrogen, linear, branched and cyclic (C₁-C₁₂)-alkyl groups, and (hetero)aryl groups, in particular phenyl,
         ▪ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
         ▪ COO⁻ and COOH,
         ▪ OH or O⁻,
         ▪ SO₃H or SO₃⁻,
   said optionally substituted heteroaryl being for example a pyridinium;
X₁ and X₂ are independently chosen from;
   - Aryl groups,
   - Aryl groups being substituted, in particular at least in ortho or meta, by at least one R₂ group chosen from:
      ∘ OH or O⁻ group,
      ∘ C≡CRₐ, wherein Rₐ is chosen from hydrogen, linear, branched and cyclic (C₁-C₁₂)-alkyl groups, and (hetero)aryl groups, in particular phenyl,
      ∘ CF₃,
      ∘ N₃,
      ∘ OR, wherein R is chosen from linear, branched and cyclic (C₁-C₁₂)-alkyl groups, in particular Me, and CH₂-COORₐ, wherein Rₐ is chosen from hydrogen, linear, branched and cyclic (C₁-C₁₂)-alkyl groups,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ SH or S⁻ group,
      ∘ NH₂ group
      ∘ COO⁻ and COOR, wherein R is chosen from hydrogen, linear, branched and cyclic (C₁-C₁₂)-alkyl groups, and (hetero)aryl groups, in particular phenyl, R being in particular hydrogen,
      ∘ CONRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ PRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ CH=N-NH₂, and CH=N-NHR', wherein R' is chosen from linear, branched and cyclic (C₁-C₁₂)-alkyl groups, C(=S)NH₂ and C(=O)NH₂,
      ∘ SO₃H or SO₃⁻,
   - Heteroaryl groups, for example pyridine, pyrrole, thiazole, triazole, imidazole or thiophene, being optionally substituted, in particular at least in alpha or beta with the carbon of X₁ or X₂ that is bound to the rest of the compound of formula (I), by at least one R₂ group chosen from:
      ∘ linear, branched and cyclic (C₁-C₁₂)-alkyl groups,
      ∘ OH or O⁻ group,
      ∘ SH or S⁻ group,
      ∘ NH₂ group and NRₐR_{b}
      ∘ COO⁻ and COOR, wherein R is chosen from hydrogen, linear, branched and cyclic (C₁-C₁₂)-alkyl groups, and (hetero)aryl groups, in particular phenyl, R being in particular hydrogen,
      ∘ CH₂-COO⁻ and CH₂-COOR, wherein R is chosen from hydrogen, linear, branched and cyclic (C₁-C₁₂)-alkyl groups, and (hetero)aryl groups, in particular phenyl, R being in particular hydrogen, said group being for example pyrrolyl being N-substituted by CH₂-COO⁻ or CH₂-COOH,
      ∘ Phosphines,

      said optionally substituted heteroaryl being for example a pyridinium,
      said heteroaryl groups being in particular heteroaryl groups, more particularly unsubstituted heteroaryl groups, comprising at least one N, O or S atom which is in alpha with the carbon of X₁ or X₂ that is bound to the rest of the compound of formula (I), said heteroaryl being for example a 2-pyridyl group,
   - C(Q₁)(Q₂)-Q, wherein:
      ∘ Q is (CH₂)ₙ-Q', wherein n is 0, 1 or 2, and Q' is chosen from X₁ as defined above, in particular pyridinyl, C(=O)H, C(=O)Rₐ, COORₐ and CONRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ Q₁ and Q₂ are chosen from linear, branched and cyclic (C₁-C₁₂)-alkyl groups, aryl groups, halogens, in particular F, and Q as defined above, at least one of Q₁ and Q₂ being chosen from linear, branched and cyclic (C₁-C₁₂)-alkyl groups, aryl groups, and halogens, in particular F,
With the proviso that at least one of W₁ and W₂ is chosen from aryl groups, in particular phenyl, said groups being optionally substituted by at least one R₁ group chosen from CH₂-E, said group being in particular a phenyl substituted by a R₁ group in para, wherein E is a group chosen from:
▪ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
▪ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
▪ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
▪ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
▪ C≡CRₐ, wherein Rₐ is chosen from hydrogen, linear, branched and cyclic (C₁-C₁₂)-alkyl groups, and (hetero)aryl groups, in particular phenyl,
▪ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
▪ PRₐR_{b} wherein Rₐ and R_{b} are independently chosen from hydrogen, linear, branched and cyclic (C₁-C₁₂)-alkyl groups, and (hetero)aryl groups, in particular phenyl,
▪ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
▪ COO⁻ and COOH,
▪ OH or O⁻,
▪ SO₃H or SO₃⁻.

In a particular embodiment, the coordination sphere of M is not completed with a ligand chosen from phosphines, in particular triphenylphosphine, and the following ligands:

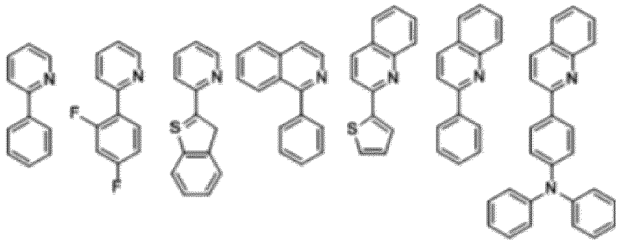

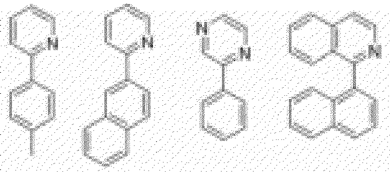

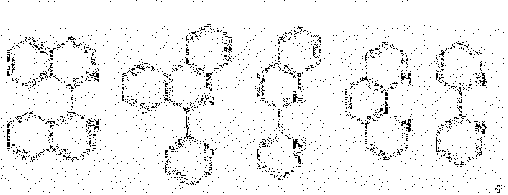

In a particular embodiment, M is chosen from transition metals and post-transition metals, in particular from transition metals.

In a particular embodiment, M is chosen from Co, Cu, Ru, Pd, Ir, Au, In, Ga, Ti, Zr, Mn, Zn, Pt, Os, and Al.

In a particular embodiment, M is not Al, Ga, or In.

In a particular embodiment, M is chosen from Co, Cu, Au, Os, Pd, Ru, Ir, Ti, Zr, Mn, Zn, and Pt.

In a particular embodiment, the coordination sphere of M is not completed with a ligand being pyridine, when M is Al, Ga, or In.

In a particular embodiment, the coordination sphere of M is not completed with a ligand being chosen from pyridine, tetrahydrofuran (THF) and optionally water, when M is Al or Ga.

In a particular embodiment, W₁ and W₂ are not both Ph or substituted Ph, in particular in para, with R₁ being OMe, NMe₂, or Me, when M is Al Ga, or In.

In a particular embodiment, W₁ and W₂ are not both Ph or substituted Ph, in particular in para, with R₁ being OR, NRₐR_{b}, or alkyl as define above, when M is Al Ga, or In.

In a particular embodiment, X₁ and X₂ are not both Ph substituted, in particular in ortho, with OH or O-, when M is Al Ga, or In.

In a particular embodiment, the coordination sphere of M is not completed with a ligand being pyridine.

In a particular embodiment, W₁ and W₂ are not both Ph or substituted Ph, in particular in para, with R₁ being OMe, NMe₂, or Me.

In a particular embodiment, W₁ and W₂ are not both Ph or substituted Ph, in particular in para, with R₁ being OR, NRₐR_{b}, or alkyl as define above.

In a particular embodiment, X₁ and X₂ are not both Ph substituted, in particular in ortho, with OH or O-.

In a particular embodiment, the compound of the invention is supported. Said support is in particular chosen from silica, TiO₂, ZnO, ZrO, alumina, zeolite, Metal-Organic Frameworks (MOFs), polymers, carbon supports, for example graphite, graphene, reduced graphene oxide, carbon nanotubes, Superparamagnetic iron oxide nanoparticles (SPION), ultrasmall superparamagnetic iron oxide (USPIO), other nanoparticles.

In a particular embodiment, the compound of the invention is bound to the support thanks to ionic interactions, Pi-stacking, covalent bonds, and/or adsorption.

In another aspect, the invention also concerns the use as a photocatalyst of a compound of following formula (II): 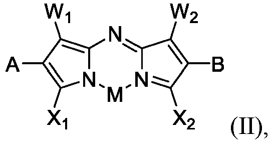 wherein:
M is a metal chosen from transition metals, post-transition metals and lanthanides, M being different from bore;
A and B are independently chosen from:
   - H,
   - halogens, in particular F, Cl, Br and I,
   - CF₃,
   - linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
   - linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
   - linear, branched and cyclic (C₂-C₁₂)-alkenyl groups, OR, wherein R is chosen from hydrogen, linear, branched and cyclic (C₁-C₁₂)-alkyl groups, in particular Me, and (hetero)aryl groups, in particular phenyl,
   - NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
   - Aryl and heteroaryl groups, said groups being optionally substituted by at least one R₁ group chosen from:
      ∘ halogens, in particular F, Cl, Br and I,
      ∘ CF₃,
      ∘ N₃,
      ∘ OR, wherein R is chosen from linear, branched and cyclic (C₁-C₁₂)-alkyl groups, in particular Me, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ∘ COO⁻ and COOR, wherein R is chosen from hydrogen, linear, branched and cyclic (C₁-C₁₂)-alkyl groups, and (hetero)aryl groups, in particular phenyl,
      ∘ P⁺RₐR_{b}R_{c}, P(=O)(ORₐ)(OR_{b}), P(=O)(ORₐ)(O⁻), and PO₃²⁻, wherein Rₐ, R_{b} and R_{c} are independently chosen from hydrogen, linear, branched and cyclic (C₁-C₁₂)-alkyl groups, and (hetero)aryl groups, in particular phenyl,
      ∘ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
      ∘ SO₃H or SO₃⁻;
W₁ and W₂ are independently chosen from:
   - linear, branched and cyclic (C₁-C₁₂)-alkyl groups, in particular Me,
   - linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
   - linear, branched and cyclic (C₂-C₁₂)-alkenyl groups, Aryl and heteroaryl groups, said groups being optionally substituted by at least one R₁ group chosen from:
      ∘ linear, branched and cyclic (C₁-C₁₂)-alkyl groups,
      ∘ halogens, in particular F, Cl, Br and I,
      ∘ CF₃,
      ∘ N₃,
      ∘ OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ C≡CRₐ, wherein Rₐ is chosen from hydrogen, linear, branched and cyclic (C₁-C₁₂)-alkyl groups, and (hetero)aryl groups, in particular phenyl,
      ∘ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
      ∘ PRₐR_{b} wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
      ∘ COO⁻ and COOH,
      ∘ OH or O⁻,
      ∘ SO₃H or SO₃⁻,
      ∘ CH₂-E, said group being in particular a phenyl group, more particularly a phenyl substituted by a R₁ group in para, wherein E is a group chosen from:
         ▪ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
         ▪ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
         ▪ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
         ▪ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
         ▪ C≡CRₐ, wherein Rₐ is chosen from hydrogen, linear, branched and cyclic (C₁-C₁₂)-alkyl groups, and (hetero)aryl groups, in particular phenyl,
         ▪ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
         ▪ PRₐR_{b} wherein Rₐ and R_{b} are independently chosen from hydrogen, linear, branched and cyclic (C₁-C₁₂)-alkyl groups, and (hetero)aryl groups, in particular phenyl,
         ▪ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
         ▪ COO⁻ and COOH,
         ▪ OH or O⁻,
         ▪ SO₃H or SO₃⁻,
   said optionally substituted heteroaryl being for example a pyridinium;
X₁ and X₂ are independently chosen from;
   - Aryl groups,
   - Aryl groups being substituted, in particular at least in ortho or meta, by at least one R₂ group chosen from:
      ∘ OH or O⁻ group,
      ∘ C≡CRₐ, wherein Rₐ is chosen from hydrogen, linear, branched and cyclic (C₁-C₁₂)-alkyl groups, and (hetero)aryl groups, in particular phenyl,
      ∘ CF₃,
      ∘ N₃,
      ∘ OR, wherein R is chosen from linear, branched and cyclic (C₁-C₁₂)-alkyl groups, in particular Me, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ SH or S⁻ group,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ COO⁻ and COOR, wherein R is chosen from hydrogen, linear, branched and cyclic (C₁-C₁₂)-alkyl groups, and (hetero)aryl groups, in particular phenyl, R being in particular hydrogen,
      ∘ CONRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ PRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ CH=N-NH₂, and CH=N-NHR', wherein R' is chosen from linear, branched and cyclic (C₁-C₁₂)-alkyl groups, C(=S)NH₂ and C(=O)NH₂,
      ∘ SO₃H or SO₃⁻,
   - Heteroaryl groups, for example pyridine, pyrrole, thiazole, triazole, imidazole or thiophene, being optionally substituted, in particular at least in alpha or beta with the carbon of X₁ or X₂ that is bound to the rest of the compound of formula (I), by at least one R₂ group chosen from:
      ∘ linear, branched and cyclic (C₁-C₁₂)-alkyl groups,
      ∘ OH or O⁻ group,
      ∘ C≡CRₐ, wherein Rₐ is chosen from hydrogen, linear, branched and cyclic (C₁-C₁₂)-alkyl groups, and (hetero)aryl groups, in particular phenyl,
      ∘ CF₃,
      ∘ N₃,
      ∘ OR, wherein R is chosen from linear, branched and cyclic (C₁-C₁₂)-alkyl groups, in particular Me, and CH₂-COORₐ, wherein Rₐ is chosen from hydrogen, linear, branched and cyclic (C₁-C₁₂)-alkyl groups, and (hetero)aryl groups, in particular phenyl,
      ∘ linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
      ∘ SH or S⁻ group,
      ∘ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
      ∘ COO⁻ and COOR, wherein R is chosen from hydrogen, linear, branched and cyclic (C₁-C₁₂)-alkyl groups, and (hetero)aryl groups, in particular phenyl, R being in particular hydrogen,
      ∘ CH₂-COO⁻ and CH₂-COOR, wherein R is chosen from hydrogen, linear, branched and cyclic (C₁-C₁₂)-alkyl groups, and (hetero)aryl groups, in particular phenyl, R being in particular hydrogen, said group being for example pyrrolyl being N-substituted by CH₂-COO^{- or} CH₂-COOH,
      ∘ PRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
      ∘ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
      ∘ CH=N-NH₂, and CH=N-NHR', wherein R' is chosen from linear, branched and cyclic (C₁-C₁₂)-alkyl groups, C(=S)NH₂ and C(=O)NH₂,
      ∘ SO₃H or SO₃⁻,

      said optionally substituted heteroaryl being for example a pyridinium,
      said heteroaryl groups being in particular heteroaryl groups, more particularly unsubstituted heteroaryl groups, comprising at least one N, O or S atom which is in alpha with the carbon of X₁ or X₂ that is bound to the rest of the compound of formula (I), said heteroaryl being for example a 2-pyridyl group,
   - C(Q₁)(Q₂)-Q, wherein:
      ∘ Q is (CH₂)ₙ-Q', wherein n is 0, 1 or 2, and Q' is chosen from X₁ as defined above, in particular pyridinyl, C(=O)H, C(=O)Rₐ, COORₐ and CONRₐR_{b}, wherein Rₐ and R_{b} are independently chosen from hydrogen, linear, branched and cyclic (C₁-C₁₂)-alkyl groups, and (hetero)aryl groups, in particular phenyl,
      ∘ Q₁ and Q₂ are chosen from linear, branched and cyclic (C₁-C₁₂)-alkyl groups, aryl groups, halogens, in particular F, and Q as defined above, at least one of Q₁ and Q₂ being chosen from linear, branched and cyclic (C₁-C₁₂)-alkyl groups, aryl groups, and halogens, in particular F,
or A and W₁, and/or B and W₂ form together a fused arene, in particular a fused benzene, said arene being optionally substituted as defined above about W₁ and/or W₂,
or A and X₁, and/or B and X₂ form together a fused arene, in particular a fused phenanthrene, said arene being optionally substituted as defined above about X₁ and/or X₂,

All the embodiments described above about the compound of formula (I) also apply here, alone or in any combination.

In another aspect, the invention also concerns a process of photocatalysis comprising a step of irradiation of a reaction mixture comprising a compound of formula (II) as defined above.

All the embodiments described above about the compound of formula (I) also apply here, alone or in any combination.

In a particular embodiment, said photocatalysis results in a transfer of atomic electron or energy between said compound of formula (II) and a target molecule, in particular organic, inorganic or gaseous.

In a particular embodiment, said photocatalysis is an homogeneous catalysis.

In another particular embodiment, said photocatalysis is an heterogeneous catalysis.

In a particular embodiment, the irradiation is performed with red and/or near infrared light, in particular with a wavelength from 620 to 2000 nm, more particularly from 650 to 810 nm.

In a particular embodiment, the irradiation is performed under sunlight.

In another particular embodiment, the irradiation is performed across the visible and infrared spectrum.

In another particular embodiment, the irradiation is performed across the entire visible and near-infrared spectrum.

### DEFINITIONS

The following terms and expressions contained herein are defined as follows:
As used herein, a range of values in the form "x-y" or "x to y", or "x through y", include integers x, y, and the integers therebetween. For example, the phrases "1-6", or "1 to 6" or "1 through 6" are intended to include the integers 1, 2, 3, 4, 5, and 6. Preferred embodiments include each individual integer in the range, as well as any subcombination of integers. For example, preferred integers for "1-6" can include 1, 2, 3, 4, 5, 6, 1-2, 1-3, 1-4, 1-5, 2-3, 2-4, 2-5, 2-6, etc.

It is recognized that compounds of the present invention may exist in various stereoisomeric forms. As such, the compounds of the present invention include both diastereomers and enantiomers. The compounds are normally prepared as racemates and can conveniently be used as such, but individual enantiomers can be isolated or synthesized by conventional techniques if so desired. Such racemates and individual enantiomers and mixtures thereof form part of the present invention.

It is well known in the art how to prepare and isolate such optically active forms. Specific stereoisomers can be prepared by stereospecific synthesis using enantiomerically pure or enantiomerically enriched starting materials. The specific stereoisomers of either starting materials or products can be resolved and recovered by techniques known in the art, such as resolution of racemic forms, normal, reverse-phase, and chiral chromatography, recrystallization, enzymatic resolution, or fractional recrystallization of addition salts formed by reagents used for that purpose. Useful methods of resolving and recovering specific stereoisomers described in Eliel, E. L.; Wilen, S.H. Stereochemistry of Organic Compounds; Wiley: New York, 1994, and Jacques, J, et al. Enantiomers, Racemates, and Resolutions; Wiley: New York, 1981, each incorporated by reference herein in their entireties.

It is also specified that all the formulae defined in the present specification include all the possible resonance structures, being in particular noted that the structures represented herein may not be the most stable resonance structures.

As used herein, the term "alkyl" refers to a straight-chain, or branched alkyl group having 1 to 6 carbon atoms, such as methyl, ethyl, propyl, isopropyl, butyl, isobutyl, sec-butyl, tert-butyl, pentyl, isoamyl, neopentyl, 1-ethylpropyl, 3-methylpentyl, 2,2-dimethylbutyl, 2,3-dimethylbutyl, hexyl, etc. The alkyl moiety of alkyl-containing groups, such as aralkyl or O-alkyl groups, has the same meaning as alkyl defined above. Lower alkyl groups, which are preferred, are alkyl groups as defined above which contain 1 to 4 carbons. A designation such as "C₁-C₄ alkyl" refers to an alkyl radical containing from 1 to 4 carbon atoms. The term "alkyl" can also refer to a cycloalkyl, as defined below.

As used herein, the term "cycloalkyl" refers to a saturated or partially saturated mono- or bicyclic alkyl ring system containing 3 to 10 carbon atoms. For example, a designation such as "C₅-C₆ cycloalkyl" refers to a cycloalkyl radical containing from 5 to 6 ring carbon atoms. Examples of cycloalkyl groups include such groups as cyclopropyl, cyclobutyl, cyclopentyl, cyclohexyl, cycloheptyl, cyclooctyl, pinenyl, and adamantanyl. The cycloalkyl moiety of cycloalkyl-containing groups, such as O-cycloalkyl groups, has the same meaning as alkyl defined above.

The term "halogen", as used in the present invention, refers in particular to a fluorine, bromine, chlorine or iodine atom.

The term "alkenyl" refers in particular to any straight or branched hydrocarbon chain, carrying at least one double bond, of 2 to 12 carbon atoms, preferably 2 to 6 carbon atoms, such as for example ethenyl, 2-propenyl, 2-butenyl, 3-butenyl, 2-pentenyl and its isomers, 2-hexenyl and its isomers, 2,4-pentadienyl.

The term "alkynyl" refers in particular to any linear or branched hydrocarbon chain, carrying at least one triple bond, of 2 to 12 carbon atoms, preferably of 2 to 6 carbon atoms, such as for example ethynyl, 2-propynyl, 2-butynyl, 3-butynyl, 2-pentynyl and its isomers, 2-hexynyl and its isomers

As used herein, the term "aryl" refers to a substituted or unsubstituted, mono- or bicyclic hydrocarbon aromatic ring system having 6 to 10 ring carbon atoms. Examples include phenyl and naphthyl. Preferred aryl groups include unsubstituted or substituted phenyl and naphthyl groups. Included within the definition of "aryl" are fused ring systems, including, for example, ring systems in which an aromatic ring is fused to a cycloalkyl ring. Examples of such fused ring systems include, for example, indane, indene, and tetrahydronaphthalene.

As used herein, the term "heteroaryl" refers to an aromatic group containing 5 to 13 ring carbon atoms in which one or more ring carbon atoms are replaced by at least one hetero atom such as -O-, -N-, or -S-. Examples of heteroaryl groups include pyrrolyl, furanyl, thienyl, pirazolyl, imidazolyl, thiazolyl, isothiazolyl, isoxazolyl, oxazolyl, oxathiolyl, oxadiazolyl, triazolyl, oxatriazolyl, furazanyl, tetrazolyl, pyridyl, pyrazinyl, pyrimidinyl, pyridazinyl, triazinyl, tetrazinyl, indolyl, isoindolyl, indazolyl, benzofuranyl, isobenzofuranyl, purinyl, quinazolinyl, quinolyl, isoquinolyl, benzoimidazolyl, benzothiazolyl, benzothiophenyl, thianaphthenyl, benzoxazolyl, benzisoxazolyl, cinnolinyl, phthalazinyl, naphthyridinyl, and quinoxalinyl. Included within the definition of "heteroaryl" are fused ring systems, including, for example, ring systems in which an aromatic ring is fused to a heterocycloalkyl ring. Examples of such fused ring systems include, for example, phthalamide, phthalic anhydride, indoline, isoindoline, tetrahydroisoquinoline, chroman, isochroman, chromene, and isochromene.

### EXAMPLES

### Example 1: synthesis of compounds of the invention

### 1. Symmetric ligand synthesis

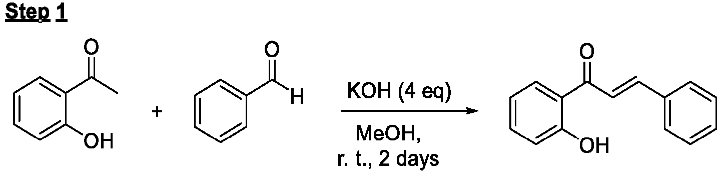

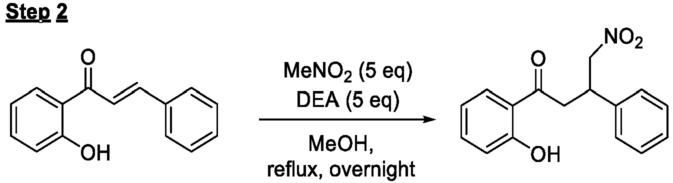

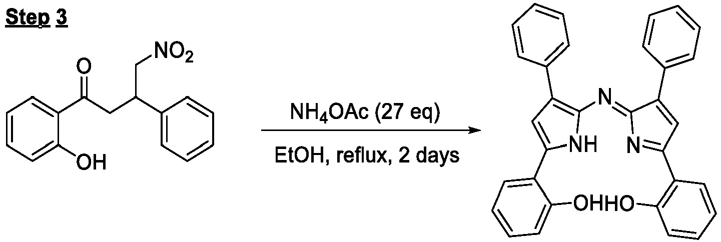

### General Scheme of ligand synthesis

### 1.1. Chalcone synthesis

### (E)-1-(2'-Hydroxyphenyl)-3-phenylprop-2-en-1-one - 1a

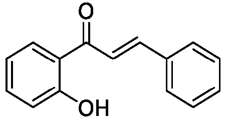

KOH (8.1, 134.5 mmol, 3.7 equiv.) was dissolved in 80 mL of MeOH in a 250 mL round bottom flask. 2'-hydroxyacetophenone (5.0 g, 36.7 mmol, 1 equiv.) and benzaldehyde (3.8 mL, 36.8 mmol, 1 equiv.) were added successively and the resulting solution was stirred at room temperature. After 2 days, the reaction was stopped and evaporated to dryness. The crude was solubilized in 40 mL of water and acidified by slow addition of HCl (3 M in water). 50 mL of DCM (dichloromethane) were added and the two layers separated. The aqueous layer was extracted with DCM (3 × 50 mL). The organic layers were combined, washed with brine (1 × 60 mL), dried over sodium sulfate, filtered and the filtrate was evaporated to dryness. The crude product was then purified by column chromatography on silica gel eluted with pentane/AcOEt (ethyl acetate, 98:2 → 1:1) to obtain **1a** as a pure yellow solid (2.66 g, 32 % yield).

**¹H NMR** (500 MHz, 298 K, CDCl₃) δ (ppm) = 6.96 (ddd, ³*J =* 8.2 Hz, ³*J =* 7.1 Hz, ³*J =* 1.2 Hz, 1H), 7.04 (dd, ³*J =* 8.4 Hz, ⁴*J =* 1.2 Hz, 1H), 7.39-7.47 (m, 3H), 7.51 (ddd, ³*J =* 8.4 Hz, ³*J* = 7.1Hz, ⁴*J =* 1.7 Hz, 1H), 7.66-7.68 (m, 2H), 7.67 (d, ³*J =* 15.5 Hz, 1H), 7.93 (d, ³*J =* 15.5 Hz, 1H), 7.93 (dd, ³*J =* 8.2 Hz, ⁴*J =* 1.7 Hz, 1H), 12.81 (s, 1H).

### (E)-1-(2'-Hydroxyphenyl)-3-(4"-bromophenyl)prop-2-en-1-one-1b

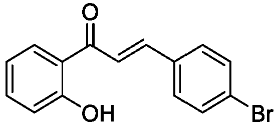

KOH (20.9 g, 372.9 mmol, 4 equiv.) was dissolved in 300 mL of EtOH in a 500 mL round bottom flask. 2'-hydroxyacetophenone (11.2 mL, 93.3 mmol, 1 equiv.) and 4-bromobenzaldehyde (17.6 g, 93.3 mmol, 1 equiv.) were added successively and the resulting solution was stirred at room temperature overnight. Upon completion, the mixture was evaporated to dryness. The solution was solubilized in 150 mL of water and acidified by slowly addition of HCl (3 M in water). 150 mL of DCM were added and the two layers separated. The aqueous layer was extracted with DCM (3 × 150 mL). The organic layers were combined, washed with brine (1 × 150 mL), dried over sodium sulfate, filtered and the filtrate was evaporated to dryness. The crude product was suspended in EtOH and filtered to obtain **1b** as a pure yellow solid (23 g, 75.9 mmol, 81 % yield).

**¹H NMR** (500 MHz, 298 K, CDCl₃) δ (ppm) = 6.95 (ddd, ³*J =* 8.2 Hz, ³*J =* 7.1 Hz, ⁴*J =* 1.1 Hz, 1H), 7.04 (dd, ³*J =* 8.4 Hz, ³*J =* 1.1 Hz, 1H), 7.50-7.54 (m, 3H), 7.57-7.59 (m, 2H), 7.65 (d, ³*J =* 15.5 Hz, 1H), 7.93 (d, ³*J =* 15.5 Hz, 1H), 7.91 (dd, ³*J =* 8.2 Hz, ₄*J*= 1.6 Hz, 1H), 12.74 (s, 1H); **¹³C NMR** (150 MHz, 298 K, CDCl₃) *δ* (ppm) = 118.9, 119.1, 120.1 , 120.9, 125.4 , 129.8 , 130.1 , 132.5 , 133.7 , 136.7 , 144.2 , 163.8 , 193.6 ; **HR-MS** (ESI): *m*/*z* calculated for C₁₅H₁₀BrO₂⁻ [M-H]⁻ 300.98697 Da, found 300.98649 Da.

### (E)-1-(2'-Hydroxyphenyl)-3-(4"-N,N-dimethylaminophenyl)prop-2-en-1-one - 1c

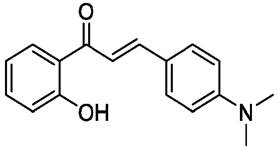

KOH (14.7 g, 282.8 mmol, 4 equiv.) was dissolved in 200 mL of EtOH in a 500 mL round bottom flask. 2'-hydroxyacetophenone (7.9 mL, 65.7 mmol, 1 equiv.) and 4-dimethylaminobenzaldehyde (10 g, 67.0 mmol, 1.02 equiv.) were added successively and the resulting solution was stirred at room temperature overnight. Upon completion, the crude product was evaporated to dryness and the solution was solubilized in 800 mL of water and acidified by slowly addition of HCl (3M in water). 200 mL of DCM were added and the two layers were separated. The aqueous layer was extracted with DCM (2 × 100 mL). The organic layers were combined, washed with brine (1 × 100 mL), were dried over sodium sulfate, filtered and the filtrate was evaporated to dryness. The resulting crude product was then suspended in EtOH and filtered to remove the starting materials, then, it was washed with EtOH and evaporated to dryness to obtain 1c as a pure orange crystalline powder (4.38 g, 24 % yield).

**¹H NMR** (500 MHz, 298 K, CDCl₃) δ (ppm) = 3.06 (s, 6H), 6.69-6.73 (m, 2H), 6.91-6.94 (m, 1H), 7.00-7.03 (m, 1H), 7.44-7.49 (m, 2H), 7.57-7.61 (m, 2H), 7.90-7.96 (m, 2H), 13.20 (s, 1H) ; **¹³C NMR** (150 MHz, 298 K, CDCl₃) *δ* (ppm) = 40.3, 112.0, 114.4, 118.6, 118.7, 120.5, 122.5, 129.5, 131.0, 135.8, 146.7, 152.5, 163.6, 193.7; **HR-MS** (ESI): *m*/*z* calculated for C₁₇H₁₇NNaO₂⁺[M+Na]⁺ 290.11515 Da, found 290.11519 Da.

### (E)-3-(4'-N,N-dimethylaminophenyl)-1-(2"-pyridinyl)prop-2-en-1-one - 1d

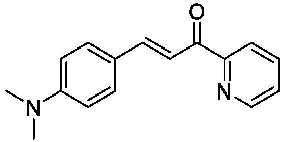

In a 250 mL round bottom flask, potassium hydroxide (3.7 g, 65.4 mmol, 4 equiv.) was dissolved in 50 mL of methanol. Then 4-dimethylaminebenzaldehyde (2.5 g, 16.4 mmol, 1 equiv.) and 2-acetylpyridine (1.8 mL, 16.4 mmol, 1 equiv.) were introduced. The yellow solution was stirred at room temperature (19°C). Upon completion, the solvant was reduces to the half and the crude was placed into the freezer overnight. The orange precipitate was filtered under vacuum to lead to **1d** as a pure orange powder (3.0 g, 72 % yield).

**¹H NMR** (500 MHz, 298 K, CDCl₃) δ (ppm) = 3.04 (s, 6H), 6.69 (d, ³*J =* 8.8 Hz, 2H), 7.44-7.46 (m, 1H), 7.64 (d, ³*J =* 8.8 Hz, 2H), 7.85 (t, ³*J* = 7.8 Hz, 1H), 7.94 (d, ³*J =* 15.7 Hz, 1H), 8.08 (d, ³*J =* 15.7 Hz, 1H), 8.18 (d, ³*J =* 7.8 Hz, 1H), 8.73 (d, *³J* = 4.1 Hz, 1H); **¹³C NMR** (125 MHz, 298 K, CDCl₃) δ (ppm) = 40.3, 111.9, 115.6, 122.9, 123.2, 126.5, 131.1, 137.0, 146.1, 148.8, 152.2, 155.2, 189.4; **HR-MS** (ESI) : *m*/*z* calculated for C₁₆H₁₇ON₂ [M+H]⁺ 253.13354 Da, found 253.13330 Da.

### 1.2. Michael adducts synthesis

### 1-(2'-Hydroxyphenyl)-4-nitro-3-phenylbutan-1-one - 2a

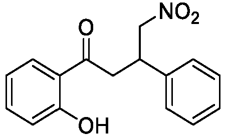

**1a** (15.0 g, 66.9 mmol, 1 equiv.) was suspended in 160 mL of MeOH in a 500 mL round bottom flask. Diethylamine (28.9 mL, 334.4 mmol, 5 equiv.) and nitromethane (17.9 mL, 334.4 mmol, 5 equiv.) were added, and the reaction was refluxed overnight. Upon completion, 160 mL of an HCl solution (3M in water) were added slowly followed by 120 mL of EtOAc. The mixture was transferred in a separating funnel and the two layers separated. The aqueous layer was extracted with EtOAc (2 × 50 mL). The organic layers were combined, washed with brine (1 × 50 mL), dried over sodium sulfate and filtered. The solvent was removed and the crude product purified by column chromatography on silica gel eluted with 100% DCM to obtain **2a** as a pure brown solid (13.6 g, 72 % yield).

**¹H NMR** (500 MHz, 298 K, CDCl₃) δ (ppm) = 3.28 (m, 2H), 4.16-4.22 (m, 1H), 4.69 (dd, ²*J* = 12.6 Hz, ³*J =* 7.8 Hz, 1H), 4.81 (dd, ²*J* = 12.6 Hz, ³*J* = 7.1 Hz, 1H), 6.90 (ddd, ³*J* = 8.2 Hz, ³*J* = 7.1 Hz, ⁴*J =* 1.2 Hz, 1H), 6.98 (dd,³*J =* 8.4 Hz, ⁴*J =* 1.2 Hz, 1H), 7.27-7.31 (m, 3H,), 7.33-7.38 (m, 2H), 7.48 (ddd, ³*J* = 8.4 Hz, ³*J* = 7.1 Hz, ⁴*J =* 1.7 Hz, 1H), 7.71 (dd, *³J=* 8.2 Hz, ⁴*J =* 1.7 Hz, 1H,), 11.96 (s, 1H); **¹³C NMR** (150 MHz, 298 K, CDCl₃) *δ* (ppm) = 39.3, 41.2, 79.7, 118.9, 119.2, 119.3, 127.5, 128.2, 129.3, 129.7, 137.0, 138.8, 162.7, 202.8; **HR-MS** (ESI): *m*/*z* calculated for C₁₆H₁₅NNaO₄⁺ [M+Na]⁺ 308.08933 Da, found 308.08983 Da.

### 1-(2'-Hydroxyphenyl)-4-nitro-3-(4"-bromophenyl)butan-1-one - 2b

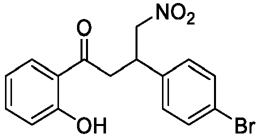

**1b** (11.0 g, 36.3 mmol, 1 equiv.) was suspended in 80 mL of MeOH in a 250 mL round bottom flask. Diethylamine (18.8 mL, 181.4 mmol, 6 equiv.) and nitromethane (9.7 mL, 181.4 mmol, 6 equiv.) were added, and the reaction refluxed overnight. Upon completion, 100 mL of HCl (3M in water) were added slowly followed by 120 mL of ethyl acetate. The content was transferred to a separating funnel and the two layers were separated. The aqueous layer was extracted with ethyl acetate (2 × 100 mL). The organic layers were combined, washed with brine (1 × 100 mL), dried over sodium sulfate and filtered. The solvent was removed and the crude product purified by column chromatography on silica gel eluted with pentane/DCM (9/1 → 100% DCM) to obtain **2b** as a pure green oil (7.06 g, 57% yield).

**¹H NMR** (500 MHz, 298 K, CDCl₃) δ (ppm) = 3.41-3.52 (m, 2H), 4.18-4.23 (m, 1H), 4.66 (dd, ²*J* = 12.6 Hz, *3J=* 7.9 Hz, 1H), 4.79 (dd, ²*J* = 12.6 Hz, ³*J* = 7.0 Hz, 1H), 6.90 (ddd, *3J=* 8.2 Hz, ³*J =* 7.2 Hz, ⁴*J* = 1.2 Hz, 1H), 6.98 (dd, *³J =* 8.4 Hz, ⁴*J* = 1.2 Hz, 1H), 7.17 (d, ³*J =* 8.4 Hz, 2H), 7.46-7.51 (m, 1H), 7.48 (d, ³*J =* 8.4 Hz, 2H), 7.69 (dd, ³*J =* 8.2 Hz, 4J= 1.7 Hz, 1H), 11.96 (s, 1H); **¹³C NMR** (150 MHz, 298 K, CDCl₃) *δ* (ppm) = 38.7, 41.0, 79.4, 119.0, 119.1, 119.4, 122.2, 129.3, 129.6, 132.5, 137.2, 137.8, 162.7, 202.3.

### 1-(2'-Hydroxyphenyl)-3-(4"-N,N-dimethylaminophenyl)-4-nitrobutan-1-one - 2c

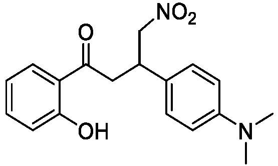

**1c** (4.4 g, 16.4 mmol, 1 equiv.) was suspended in 35 mL of MeOH in a 100 mL round bottom flask. Diethylamine (8.5 mL, 81.9 mmol, 5 equiv.) and nitromethane (4.4 mL, 81.9 mmol, 5 equiv.) were added, and the reaction was refluxed overnight. Upon completion, 60 mL of HCl (3M in water) were added slowly, followed by 60 mL of ethyl acetate. The contents were transferred to a separating funnel and the two layers separated. The aqueous layer was extracted with ethyl acetate (2 × 100 mL). The organic layers were combined, washed with brine (1 × 100 mL), dried over sodium sulfate and filtered. The solvent was removed and the crude product purified by column chromatography on silica gel eluted with pentane/DCM (9/1 → 100% DCM) to obtain **2c** as a pure green oil (2.53 g, 47% yield).

**¹H NMR** (500 MHz, 298 K, CDCl₃) δ (ppm) = 2.92 (s, 6H), 3.38-3.51 (m, 2H), 4.09-4.15 (m, 1H), 4.63 (dd, ²*J*= 12.3 Hz, ³*J* = 7.6 Hz, 1H), 4.75 (dd, ²*J* = 12.3 Hz, ³*J* = 7.1 Hz, 1H), 6.67 (d, ³*J* = 8.8 Hz, 2H), 6.89 (ddd, ³*J =* 8.0 Hz, ³*J =* 7.1 Hz, ⁴*J =* 1.1 Hz, 1H), 6.97 (dd, ³*J* = 8.4 Hz, ⁴*J* = 1.1 Hz, 1H), 7.12 (d, ³*J =* 8.8 Hz, 2H), 7.47 (ddd, ³*J =* 8.4 Hz, ³*J =* 7.1 Hz, ⁴*J* = 1.6 Hz, 1H), 7.73 (dd, *3J=* 8.0 Hz, ⁴*J =* 1.6 Hz, 1H), 12.03 (s, 1H); **¹³C NMR** (150 MHz, 298 K, CDCl₃) *δ* (ppm) = 38.6, 40.6, 41.5, 80.1, 112.9, 118.8 , 119.2, 119.3, 125.9, 128.2, 129.8, 137.0, 150.3, 162.6, 203.3.

### 1-(Ethyl 2-phenoxyacetate)-4-nitro-3-phenylbutan-1-one - 2d

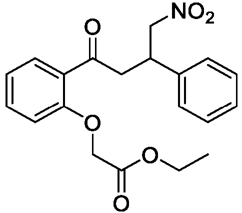

**2a** (2.0 g, 7.0 mmol, 1 equiv.) was dissolved in 20 mL of DMF in a 50 mL round bottom flask. Potassium carbonate (1.5 g, 11.2 mmol, 1.6 equiv.) was introduced and ethyl bromoacetate (1.4 g, 8.4 mmol, 1.2 equiv.) was added slowly. The reaction was stirred at room temperature overnight. Upon completion, the DMF was removed, the product was dissolved in 20 mL of DCM and 50 mL of water were added. The mixture was transferred in a separating funnel and the two layers separated. The organic layer was washed with water (3 × 50 mL). The organic layers were combined, washed with brine (1 × 50 mL), dried over sodium sulfate and filtered. The solvent was removed to 2d as a pure oil (2.5 g, 97 % yield). **¹H NMR** (500 MHz, 298 K, CDCl₃) δ (ppm) = 1.32 (t, *³J =* 7.1 Hz, 3H), 3.61 (dd, ²*J* = 18.0 Hz, *³J =* 6.7 Hz, 1H), 3.73 (dd, ²*J* = 17.9 Hz, *³J =* 7.5 Hz, 1H), 4.20 - 4.26 (m, 1H), 4.30 (q, ³*J =* 7.1 Hz, 2H), 4.72 (dd, 2J= 12.4 Hz, ³*J =* 8.9 Hz, 1H), 4.77 (s, 2H), 4.86 (dd, ²*J* = 12.4 Hz, ³*J =* 6.0 Hz, 1H), 6.92 (d, ³*J =* 8.4 Hz, 1H), 7.09 (t, ³*J =* 7.5 Hz, 1H), 7.29-7.39 (m, 5H), 7.52 - 7.54 (m, 1H), 7.66 (dd, ²*J* = 7.8 Hz, *3J=* 1.9 Hz, 1H).

### 3-(4-N,N-Dimethylaminophenyl)-4-nitro-1-(2-pyridinyl)-butan-1-one - 2e

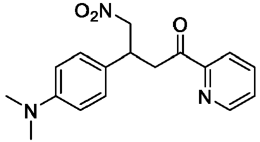

In a 250 mL round bottom flask, (*E*)-3-(4-dimethylaminophenyl)-1-(2-pyridinyl)prop-2-en-1-one (2.0 g, 7.9 mmol, 1 equiv.) was dissolved in 60 mL of methanol and the solution was heated. Then, the diethylamine (4.9 mL, 47.5 mmol, 6 equiv.) and the nitromethane (4.2 mL, 79.2 mmol, 10 equiv.) was added. The reaction was stirred at the reflux temperature of methanol (65 °C). After 6 h, the solvent was removed under reduce pressure and the crude was purified by chromatography on silica gel eluted with AcOEt/Pentane 2/8, to give **2e** as a pure brown solid (0.7 g, 34 % yield).

**¹H NMR** (500 MHz, 298 K, CDCl₃) *δ* (ppm) = 2.90 (s, 6H), 3.58 (dd, *²J* = 18.0 Hz, ³*J =* 6.9 Hz, 1H), 3.79 (dd, *²J* = 18.0 Hz, ³*J =* 7.2 Hz, 1H), 4.15 (p, 1H), 4.62 (dd, *²J* = 12.2 Hz, ³*J =* 8.0 Hz, 1H), 4.73 (dd, *²J* = 12.2 Hz, ³*J =* 7.0 Hz, 1H), 6.65 (d, ³*J =* 8.8 Hz, 2H), 7.16 (d, ³*J =* 8.8 Hz, 2H), 7.45-7.47 (m, 1H), 7.80 (t, ³*J* = 7.7 Hz, 1H), 7.98 (d, ³*J =* 8.9 Hz, 1H), 8.66 (d, ³*J* = 4.9 Hz, 1H); **¹³C NMR** (125 MHz, 298 K, CDCl₃) *δ* (ppm) = 38.7 , 40.6, 41.0, 80.5, 112.7, 122.0, 126.7, 127.5, 128.3, 137.0, 149.0, 150.1, 153.0, 199.0; **HR-MS** (ESI): *m*/*z* calculated for C₁₇H₂₀O₃N₃ [M+H]⁺ 314.14992 Da, found 314.14965 Da.

### 1.3. Azadipyrromethene synthesis

### 3,5-(bis-2'-hydroxyphenyl)-1,7-diphenylazadipyrromethene - L1H₃

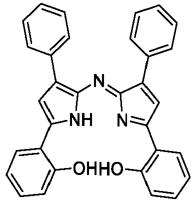

**2a** (13.3 g, 46.5 mmol, 1 equiv.) was dissolved in 260 mL of EtOH in a 1L round bottom flask. NH₄OAc (Ac = Acetyl, 96.7 g, 1.3 mol, 27 equiv.) was added and the suspension refluxed during 2 days. Upon completion, the solvents were evaporated to the quarter. The crude was filtered and the powder was washed with cold MeOH until the filtrate became blue and the solid residue exhibits a clean glossy surface. The solid was transferred into a round bottom flask and dried under vacuum to isolate **L1H₃** as a pure green powder (4.6 g, 9.6 mmol, 41 % yield).

**¹H NMR** (500 MHz, 298 K, DMSO-*d₆*) δ (ppm) = 7.04 (ddd, ³*J* = 8.1 Hz, ³*J* = 7.2 Hz, ⁴*J =* 1.2 Hz, 2H), 7.14 (dd, ³*J =* 8.2 Hz, ⁴*J =* 1.2 Hz, 2H, 7.36-7.40 (m, 4H), 7.45 (m, 4H), 7.73 (s, 2H), 8.04 (d, ³*J =* 7.6 Hz, 4H), 8.11 (dd, ³*J* = 8.1 Hz, ⁴*J =* 1.7 Hz, 2H) ; **¹³C NMR** (150 MHz, 298 K, DMSO-*d₆*) *δ* (ppm) = 116.9, 117.1, 120.1, 128.1, 128.3, 128.9, 129.0, 131.9, 133.4, 140.9, 145.9, 154.6, 157.4; **HR-MS** (ESI): *m*/*z* calculated for C₃₂H₂₄N₃O₂⁺ [M+H]⁺ 482.18630 Da, found 482.18711 Da.

### 1,7-(di-4'-bromophenyl)-3,5-(bis-2"-hydroxyphenyl)-azadipyrromethene - L2H₂

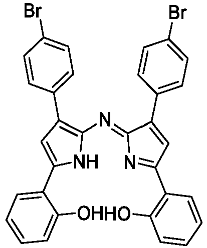

**2b** (7.6 g, 20.8 mmol, 1 equiv.) was dissolved in 130 mL of EtOH in a 500 mL round bottom flask. NH₄OAc (43.2 g, 560.3 mmol, 27 equiv.) was added and the suspension refluxed during 2 days. Upon completion, the solvents were evaporated to the quarter of the initial volume. The supernatant was filtered and the powder was washed with cold MeOH until the filtrate became blue and the solid residue exhibits a clean glossy surface. The solid was transferred into a round bottom flask and dried under vacuum to isolate **L2H₂** as a pure green powder (2.3 g, 34 % yield).

**¹H NMR** (500 MHz, 298 K, DMSO-*d₆*) δ (ppm) = 7.02-7.05 (m, 2H), 7.12 (d, ³*J*= 8.2 Hz, 2H), 7.36-7.38 (m, 2H), 7.66 (d, *³J =* 8.2 Hz, 4H), 7.75 (s, 2H), 7.96 (d, ³*J =* 8.2 Hz, 4H), 8.02 (d, ³*J =* 8.2 Hz, 2H); **¹³C NMR** (125 MHz, 298 K, DMSO-*d₆*) *δ* (ppm) = 117.0, 117.2, 117.4, 120.2, 121.6, 128.9, 130.8, 131.3, 132.0, 132.6, 139.4, 146.1, 154.7, 157.4; **HR-MS** (ESI): *m*/*z* calculated for C₃₂H₂₁Br₂N₃NaO₂⁺[M+Na]⁺ 661.98723 Da, found 661.98613 Da.

### 3,5-(Bis-2'-hydroxyphenyl)-1,7-(di-4''-N,N-dimethylaminophenyl)-azadipyrromethene - L3H₃

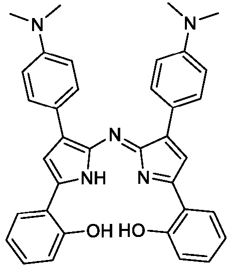

In a round bottom flask, **2c** (5.0 g, 15.2 mmol, 2 equiv.) was dissolved in 100 mL of DCM. NH₄OAc (32.0 g, 410.0 mmol, 27 equiv.) was then added and the suspension was refluxed for 2 days. Upon completion, the crude was concentrated under reduce pressure and the precipitate was filtered. The resulting solid was washed with cold methanol until the supernatant turned blue. The blue solid was transferred into a round bottom flask and evaporated until dryness to lead to **L3H₃** as a pure dark blue solid (1.5 g, 25 % yield).

**¹H NMR** (500 MHz, 298 K, DMSO-*d₆*) *δ* (ppm) = 3.01 (s, 12H), 6.78 (d, ³*J =* 9.0 Hz, 4H), 7.00 (t, *3J=* 7.6 Hz 2H), 7.11 (d, ³*J* = 8.3 Hz, 2H), 7.34 (t, ³*J* = 7.7 Hz, 2H), 7.51 (s, 2H), 7.98 (d, ³*J =* 9.0 Hz, 4H), 7.11 (d, ³*J* = 8. Hz, 2H); **¹³C NMR** (125 MHz, 298 K, DMSO-*d₆*) *δ* (ppm) = 39.8, 111.7, 112.7, 116.9, 116.9, 119.8, 121.3, 128.6, 130.1, 131.3, 141.4, 145.5, 150.1, 154.3, 157.3.

### 1,7-(Di-4'-N,N-dimethylaminophenyl)-3,5-(bis-2"-pyridinyl)-azadipyrromethene-L4H

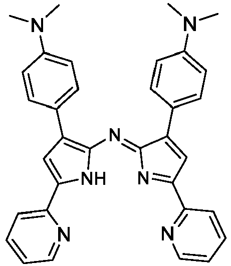

In a 100 mL round bottom flask, **2e** (200.0 mg, 0.6 mmol, 2 equiv.) was dissolved in 5 mL of EtOH. Ammonium acetate (1.3 g, 17.2 mmol, 27 equiv.) was then added and the solution was heated to reflux (78 °C). After around 2 hours, the mixture turned to a dark blue. After 48 hours, the reaction was stopped, the EtOH was evaporated. The product was transferred into falcon tubes and washed 3 times using 10 mL of cold MeOH by centrifugation. Then the product **L4H** was obtained as a blue powder (40.0 mg, 12 % yield).

**¹H NMR** (500 MHz, 298 K, DMSO-*d₆*) *δ* (ppm) = 3.05 (s, 12H), 6.79 (d, ³*J* = 8.4 Hz, 2H), 7.29-7.31 (m, 4H), 7.80-7.83 (m, 2H), 8.07 (d, ³*J =* 8.4 Hz, 4H), 8.17 (d, ³*J* = 7.9 Hz, 2H), 8.75 (s, 2H); **¹³C NMR** (125 MHz, 298 K, DMSO-*d₆*) δ (ppm) = 40.3, 111.9, 112.5, 121.5, 122.6, 123.3, 130.4, 136.4, 142.9, 149.8, 150.1, 150.8 ; **HR-MS** (ESI) : *m*/*z* calculated for C₃₄H₃₂N₇ [M+H]⁺ 538.27137 Da, found 538.27134 Da.

### 3,5-(Bis-2'-(ethyl 2"-phenoxyacetate)-1,7-diphenylazadipyrromethene - L5H

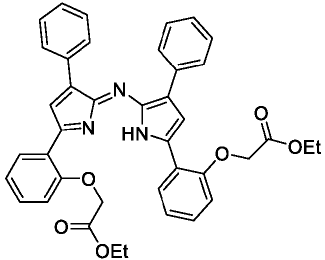

In a round bottom flask, **2d** (2.5 g, 6.7 mmol, 1 equiv.) and ammonium acetate (15.5 g, 0.2 mol, 30 equiv.) was mixed in ethanol (75 mL) and left stirring at 80 °C for 48 hours. After then, the red glittery precipitate formed was collected and washed extensively with ethanol to afford **L5H** (0.9 g, 20% yield).

**¹H NMR** (500 MHz, CD₂Cl₂) δ (ppm) = 1.24 (t, ³*J* = 7.1 Hz, 6H), 4.23 (q, ³*J* = 7.1 Hz, 4H), 4.78 (s, 4H), 6.94 (dd, ³*J =* 8.4 Hz, ⁴*J* = 1.0 Hz, 2H), 7.13 (td, ³*J* = 7.5 Hz, ⁴*J* = 1.0 Hz, 2H), 7.33 - 7.44 (m, 8H), 7.55 (s, 2H), 8.07 (d, ³*J* = 7.1 Hz, 4H), 8.08 - 8.11 (m, 2H) ; **¹³C NMR** (125 MHz, CD₂Cl₂) δ 14.5, 62.0, 66.5, 113.5, 119.2, 122.4, 122.7, 128.3, 128.7, 129.6, 129.7, 131.6, 134.6, 141.6, 149.2, 153.9, 156.9, 168.8.

### 3,5-(Bis-2'-(2"-phenoxyacetic acid))-1,7-diphenylazadipyrromethene - L6H₃

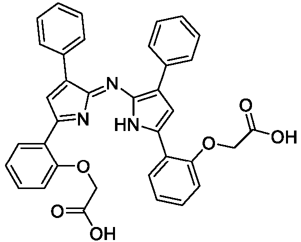

In a round bottom flask, **L5H** (0.5 g, 0.8 mmol, 1 equiv.), NaOH (0.2 g, 4.9 mmol, 6 equiv.) and KOH (0.3 g, 4.9 mmol, 6 equiv.) were dissolved in 40 mL of ethanol. The reaction was left stirring at room temperature for 24 hours where all the mixture become homogeneous. After then, the solution was acidified with 3M HCl reaching pH ~ 2. The precipitate formed was collected and washed with water extensively and left to dry for 24 hours. Then the powder was washed with pentane to afford **L6H₃** (0.5 g, 99 % yield).

**¹H NMR** (500 MHz, DMSO-*d₆*) δ (ppm) = 4.87 (s, 4H), 7.11 (broad d, ³*J =* 8.5 Hz, 2H), 7.15 (broad t, ³*J =* 7.5 Hz, 2H), 7.37 - 7.49 (broad m, 8H), 7.82 (three s, 2H), 8.03 (broad d, ³*J =* 7.5 Hz, 4H), 8.12 (broad d, ³*J =* 7.7 Hz, 2H); **¹³C NMR** (125 MHz, DMSO-*d₆*) δ (ppm) = 65.6, 113.8, 119.4, 122.2, 128.8, 129.1, 129.2, 132.7, 133.5, 141.1, 153.7, 156.6, 170.3.

### 3,5-(Bis-2'-hydroxyphenyl)-1,7-(di-4"-N,N,N-trimethylanilinium iodide)-azadipyrromethene - L7H₃

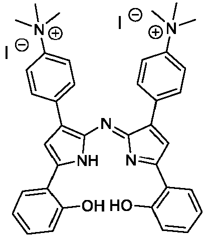

**L3H₃** (200.0 mg, 0.4 mmol, 1 equiv.) was solubilized in iodomethane (3.0 mL, 48.6 mmol, 138 equiv.) in a round bottom flask. The mixture was stirred during 2 days at reflux (40°C). The crude product was evaporated to dryness and was precipited upon the addition of DCM. Then the suspension was centrifuged, the supernatant was removed and this operation was repeated four times. The solid was dried under vacuum to isolate the corresponding **L7H₃** as a dark solid (280 mg, 94 % yield).

**¹H NMR** (500 MHz, 298 K, DMSO-*d₆*) *δ* (ppm) = 3.67 (s, 18H), 7.08 (t, ³*J* = 7.6 Hz, 2H), 7.15 (d, ³*J* = 8.2 Hz, 2H), 7.41 (t, ³*J* = 7.8 Hz, 2H), 7.86 (s, 2H), 8.07 (d, ³*J* = 8.7 Hz, 4H), 8.13 (d, ³*J* = 8.0 Hz, 2H), 8.25 (d, ³*J =* 8.7 Hz, 4H); **¹³C NMR** (125 MHz, 298 K, DMSO-d₆) δ (ppm) = 56.8, 116.9, 117.2, 118.5, 120.2, 120.6, 129.0, 130.0, 132.2, 134.8, 138.5, 146.3, 146.5, 154.7, 157.3; **HR-MS** (ESI) : *m*/*z* calculated for C₃₈H₃₉O₂N₅²⁺ [M-2I]²⁺ 298.65464 Da, found 298.65437 Da.

### 2. Asymmetric ligand synthesis

### 3-(2'-(Ethyl 2"-phenoxyacetate)-5-(2‴-hydroxyphenyl)-1,7-diphenylazadipyrromethene - L8H₂

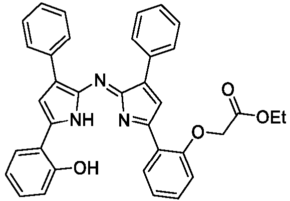

In a 100 mL round bottom flask, **2a** (1.7 g, 6.0 mmol, 1 equiv.) and **2d** (2.0, 6.0 mmol, 1 equiv.) were dissolved in 50 mL ethanol. The solution was warmed up to 60 °C to solubilize all the starting products. After that, ammonium acetate (12.6 g, 0.2 mol, 35 equiv.) was added and the mixture was refluxed at 80 °C for 48 hours. Extraction of the crude was done between dichloromethane and NaHCO₃ aqueous saturated solution (30 mL × 3) and distilled water (30 mL × 3), sequentially, after the removal of ethanol under reduced pressure. The organic layer was collected, dried over Na₂CO₃, filtered, and dried under reduced pressure in a vial. Column chromatography (SiO₂ / CH₂Cl₂) affords the desired product, **L8H₂**, as a red shiny solid (0.8 g, 25%).

**¹H NMR** (500 MHz, CD₂Cl₂) δ (ppm) = 1.04 (t, ³*J* = 7.1 Hz, 3H), 3.83 (q, ³*J =* 7.1 Hz, 2H), 4.94 (s, 2H), 7.01 - 7.05 (m, 3H), 7.16 (broad ddd, 1H), 7.23 (broad d, *3J =* 2.5 Hz, 1H), 7.34-7.46 (m, 8H), 7.54 (s, 1H), 7.84 (dd, ³*J =* 7.9, 1.7 Hz, 1H), 7.92 (dd, ³*J* = 7.8 Hz, ⁴*J* = 1.7 Hz, 1H), 8.00 - 8.04 (m, 4H), 11.33 (broad s, 1H), 12.74 (broad s, 1H) ; **¹³C NMR** (126 MHz, CD₂Cl₂) δ (ppm) = 14.2, 61.8, 66.6, 110.7, 113.3, 117.6, 117.9, 119.4, 120.2, 122.3, 122.7, 128.1, 128.8, 128.9, 129.3, 129.5, 129.7, 130.1, 130.5, 133.6, 133.9, 134.7, 135.7, 137.0, 138.7, 148.8, 155.7, 156.7, 161.4, 168.5, 171.2.

### 5-(2'-Hydroxyphenyl)-3-(2"-(2"'-phenoxyacetic acid))-1,7-diphenylazadipyrromethene - L9H₃

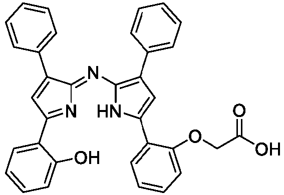

In a round bottom flask, **L8H₂** (0.5 g, 0.9 mmol, 1 equiv.) and KOH (0.3 g, 4.6 mmol, 5 equiv.) were dissolved in 40 mL ethanol. The reaction was left stirring at room temperature for 24 hours where all the mixture become homogeneous. After then, the solution was acidified with 3M HCl reaching pH ~ 2. The precipitate formed was collected and washed with water extensively and left to dry for 24 hours. After then the powder was washed with pentane to afford the **L9H₃** (0.5 g, 99%). The product was poorly soluble in THF and dichloromethane. The purity was verified by ¹H NMR in THF and then used as it is the next step.

**¹H NMR** (500 MHz, THF-*d₈*) δ (ppm) = 5.00 (s, 2H), 6.97 (m, 1H), 7.08 - 7.16 (m, 3H), 7.27 - 7.31 (m, 1H), 7.34 - 7.42 (m, 7H), 7.53 (s, 1H), 7.75 (s, 1H), 7.96 - 7.98 (m, 1H), 8.05 - 8.09 (m, 5H).

### 5-(2'-Hydroxyphenyl)-3-(2"-methoxyphenyl)-1,7-diphenylazadipyrromethene - L10H₂

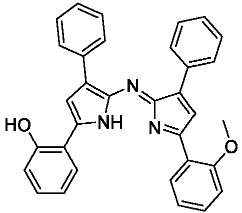

In a round bottom flask, **L1H₃** (1.0 g, 2.1 mmol, 1.0 equiv.), K₂CO₃ (1.4 g, 10.3 mmol, 3.8 equiv.), and NaHCO₃ (870.0 mg, 10.3 mmol, 3.8 equiv.) were mixed in 25 mL THF. Iodomethane (MeI, 10 mL) was added and the solution was left stirring at 40 °C for 48 hours. Then, all liquids were evaporated and the dry powder was then solubilized in dichloromethane and filtered to remove the insoluble salts. Following that, dichloromethane was evaporated under reduced pressure. The obtained mixture was then purified by column chromatography (CH₂Cl₂/pentane 50/50) to afford **L10H₂** (0.7 g, 68% yield) as a red green powder.

**¹H NMR** (500 MHz, CD₂Cl₂) δ (ppm) = 3.99 (s, 1H), 7.01 (broad t, ₃*J* = 7.5 Hz, 1H), 7.07 (broad d, ₃*J* = 8.4 Hz, 2H), 7.08 - 7.10 (m, 1 H), 7.13 (broad s, 1 H), 7.33 - 7.43 (m, 7 H), 7.47 (s, 1H), 7.81 (dd, ₃*J =* 7.9 Hz, ₄*J =* 1.6 Hz, 1H), 7.84 (dd, ₃*J =* 7.8 Hz, V = 1.7 Hz, 1H), 7.96 - 8.00 (m, 4H), 11.33 (broad s, 1H), 12.43 (broad s, 1H).

### 3. Complexation

### 3.1. Scandium complexes

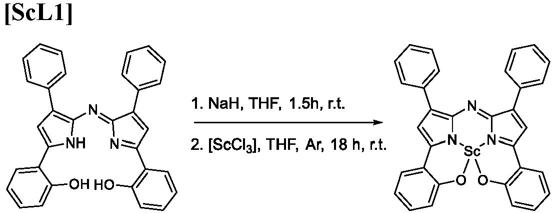

The **[ScL1]** was synthesized following a two steps synthesis:
**First step:** In the glovebox, **L1H₃** (502.0 mg, 1.0 mmol, 1 equiv.) was dissolved in 30 mL of dry THF (tetrahydrofuran) in a schlenk tube. NaH (125.0 mg, 5.2 mmol, 5 equiv.) was added and the reaction mixture was stirred at room temperature for 1.5 h and transferred *via* a filtering canula in an empty schlenk tube under argon and evaporated to dryness. The resulting product was resuspended and precipitated with pentane, and the filtrate was removed by filtering canula (this was repeated three times). The product was then dried to isolate the salt of L1 (565 mg, quantitative yield) as green powder stored in the glovebox.

**¹H NMR** (500 MHz, 298 K, THF-*d₈*) δ (ppm) = 6.20 (ddd, ³*J* = 8.0 Hz, ³*J* = 6.8 Hz, ⁴*J =* 1.3 Hz, 2H), 6.36 (dd, 3J= 8.2 Hz, ⁴*J* 1.3 Hz, 2H), 6.79 (ddd, 3J= 8.2 Hz, ³*J* = 6.8 Hz, ⁴*J* = 1.9 Hz, 2H), 7.09-7.12 (m, 2H), 7.21 (s, 2H), 7.22-7.25 (m, 4H), 7.60 (dd, ³*J* = 8.0 Hz, ⁴*J* =1.9 Hz, 2H) 8.05-8.07 (m, 4H); **¹³C NMR** (125 MHz, 298 K, DMSO-*d₆*) *δ* (ppm) = 111.6, 116.0, 124.4, 126.1, 128.3, 129.5, 130.1, 130.1, 138.4, 142.4, 153.0, 162.5, 172.5; **HR-MS** (ESI): *m*/*z* calculated for C₃₂H₂₄N₃O₂⁺ [M-3Na⁺+4H⁺]⁺ 482.18630 Da, found 482.18420 Da. **Second step:** Into the glovebox, **the salt** (30 mg, 0.05 mmol, 1 equiv.) and [ScCl₃] (8 mg, 0.05 mmol, 1 equiv.) were dissolved in 2 mL of dry THF in a schlenk tube. The green reaction was stirred into the glovebox at room temperature (22 °C) over night. After the night, all the treatment was performed into the glovebox. The THF was removed to dryness under vacuum, and the product was solubilized with DCM. The solution was filtered over celite to remove NaCl salts and evaporated to dryness. The compound was precipited upon the addition of pentane and the supernatant was removed. The solid was dried under vacuum and lead to **[ScL1]** as a dark green solid (analytical quantity).

**¹H** NMR (500 MHz, 298 K, THF-*d₈*) *δ* (ppm) = 6.65-6.68 (m, 4H), 7.12-7.15 (m, 2H), 7.27-7.34 (m, 6H), 7.47 (s, 2H), 7.86 (d, ³*J* = 10.2 Hz, 2H), 8.01 (d, ³*J* = 6.6 Hz, 4H); **¹³C NMR** (125 MHz, 298 K, THF-*d₈*) δ (ppm) = 117.5, 117.8, 120.6, 123.3, 128.1, 128.7, 129.9, 130.8, 132.5, 135.9, 143.9, 148.2, 158.7, 164.2.

### 3.2. Titanium complexes

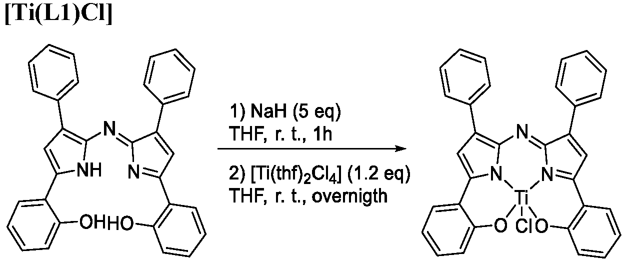

In the glovebox, **L1H₃** (100 mg, 0.21 mmol, 1 equiv.) and NaH (25 mg, 1.03 mmol, 5 equiv.) were dissolved in 10 mL of dry THF in a schlenk tube. The initially blue solution turned into green and the reaction mixture was stirred under argon at room temperature during 1 h. In the glovebox, [Ti(thf)₂Cl₄] (thf = tetrahydrofuran, 83 mg, 0.25 mmol, 1.2 equiv.) was dissolved in 5 mL of dry THF in an another schlenk tube. The deprotonated ligand was added using a filtering cannula into the titanium solution. The mixture turned immediately to red and the reaction was stirred at room temperature overnight. The crude product was evaporated to dryness under argon and 10 mL of dry DCM were added to solubilize the compound. The solution was filtered over celite under argon to remove NaCl and the resulting filtrate evaporated to dryness. 10 mL of pentane were added and the supernatant was removed *via* a filtering cannula. The compound was evaporated to dryness under argon to isolate **[Ti(L1)Cl]** as a red black powder (71 mg, 61% yield) stored in the glovebox.

**¹H NMR** (500 MHz, 298 K, THF-*d₈*) δ (ppm) = 6.69 (d, ³*J* = 8.3 Hz, 2H), 6.95-6.98 (m, 2H), 7.28 (ddd, = 8.3 Hz, ³*J* = 7.0 Hz, ⁴*J* = 1.4 Hz, 2H), 7.34-7.37 (m, 2H), 7.39 (s, 2H), 7.92 (dd, ³*J* = 8.1 Hz, ⁴*J* = 1.4 Hz, 2H), 8.00 (d, ³*J* = 7.5 Hz, ⁴*J* = 2.1 Hz, 4H) ; **¹³C NMR** (150 MHz, 298 K, THF-*d₈*) *δ* (ppm) = 116.7, 117.2, 123.3, 125.3, 129.0, 129.4, 129.8, 130.8, 132.8, 134.3, 144.7, 149.0, 157.1, 163.1.

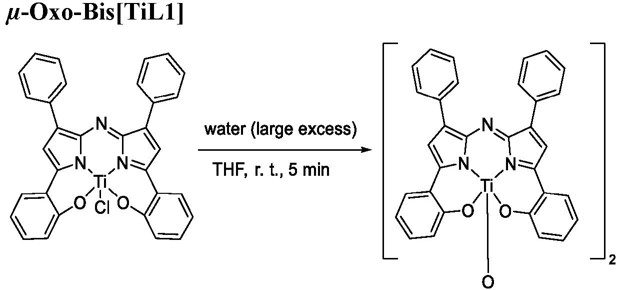

In the glovebox, **[Ti(L1)Cl]** (5 mg, 9 µmol, 1 equiv.) was dissolved in 0.5 mL of dry THF-*d8* in a J. Young NMR tube. A large excess of water (50 µL) was added, the initially red solution turned to brown immediately. The ¹H NMR revealed the formation of ***µ*-oxo-bis [TiL1]**.

**¹H NMR** (500 MHz, 298 K, THF-*d₈*) δ (ppm) = 6.29 (d, ³*J* = 8.0 Hz, 4H), 6.60-6.63 (m, 4H), 6.88-6.91 (m, 8H), 6.98-7.00 (m, 8H), 7.15-7.18 (m, 4H), 7.41 (d, ³*J =* 8.0 Hz, 4H), 7.56 (d, ³*J =* 7.5 Hz, 8H); **¹³C NMR** (150 MHz, 298 K, THF-*d₈*) *δ* (ppm) = 116.7, 120.1, 123.2, 127.8, 128.5, 129.3, 130.9, 131.7, 135.3, 142.0, 148.0, 155.6, 163.7.

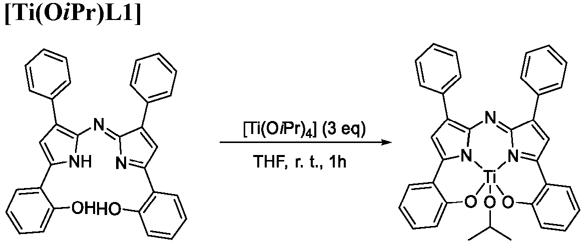

In the glovebox, salt **of L1H₃** (10 mg, 21 µmol, 1 equiv.) and [Ti(O*i*Pr)_{4]} (18 mg, 63 mmol, 3 equiv.) were solubilized in 0.5 mL of dry THF and added in a J. Young NMR tube. The reaction was followed by NMR ¹H. After 1h at room temperature, the reaction was completed and **[Ti(O*i*Pr)L1]** formed.

**¹H NMR** (600 MHz, 298 K, THF-*d₈*) δ (ppm) = 0.89 (d, ³*J_{Hp-Ho} =* 6.1 Hz, 6H, Hₚ), 4.56 (hept, ³*J_{Ho-Hp}* = 6.1 Hz, h, Hₒ), 6.79-6.82 (m, 2H, Hₖ), 6.90-6.93 (m, 2H, Hₘ), 7.31 (ddd, ³*J_{Hl- Hm}* = 8.0 Hz, ³*J_{Hl-Hk}* = 7.1 Hz, ⁴*J_{Hl-Hj} =* 1.6 Hz, 2H, Hₗ), 7.35-7.37 (m, 2H, Hₐ), 7.38-7.44 (m, 4H, H_{b}), 7.56 (s, 2H, H_{g}), 7.97 (dd, ³*J_{Hj}-_{Hk} =* 8.0 Hz, ⁴*J_{Hj-Hl}* = 1.6 Hz, 2H, Hⱼ), 8.11-8.12 (m, 4H, H_{c}); **¹³C NMR** (150 MHz, 298 K, THF-*d₈*) *δ* (ppm) = 27.1 (Cₚ), 84.6 (Cₒ), 116.7 (C_{g}), 117.2 (Ck), 120.7 (Cₘ), 123.3 (Cᵢ), 128.8 (Cₐ), 128.9 (Cb), 129.5 (Cⱼ), 130.7 (C_{c}), 132.6 (Ci), 135.2 (Cd), 143.6 (Cₑ), 147.8 (Cf), 156.1 (Ch), 163.7 (Cₙ).

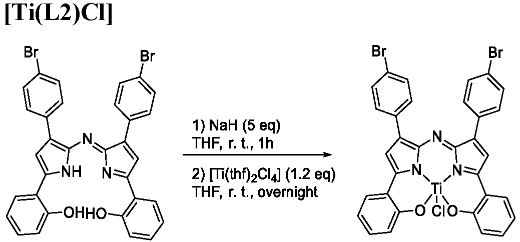

In the glovebox, **L2H₂** (100 mg, 0.16 mmol, 1 equiv.) and NaH (19 mg, 0.78 mmol, 5 equiv.) were dissolved in 10 mL of dry THF in a schlenk tube. The initially blue solution turned into green and the reaction was stirred under argon at room temperature during 1 h. In the glovebox, [Ti(thf)₂Cl₄] (52 mg, 0.16 mmol, 1 equiv.) was dissolved in 5 mL of dry THF in another schlenk tube. Then, the deprotonated ligand was added using a filtring cannula into the titanium solution. The mixture turned immediately to red and the reaction was stirred at room temperature overnight. The crude was evaporated to dryness under argon and 10 mL of dry DCM were added to solubilize the compound. Under argon, the solution was filtered over celite to remove NaCl and the filtrate evaporated to dryness. 10 mL of pentane were added and the supernatant was removed *via* a filtering cannula. The compound was evaporated to dryness under argon to isolate **[Ti(L2)Cl]** as a black powder (40 mg, 35% yield) stored in the glovebox.

**¹H NMR** (500 MHz, 298 K, THF-*d₈*) δ (ppm) = 6.69 (dd, ³*J =* 8.3 Hz, ⁴*J* = 1.2 Hz, 2H), 6.96-6.98 (m, 2H), 7.29 (ddd, ³*J* = 8.3 Hz, ³*J* = 7.1 Hz, ⁴*J* = 1.6 Hz, 2H), 7.44 (s, 2H), 7.44-7.46 (m, 2H), 7.56 (d, ³*J* = 8.5 Hz, 4H), 7.91 (d, ³*J* = 8.5 Hz, 4H); **¹³C NMR** (125 MHz, 298 K, THF-*d₈*) *δ* (ppm) = 116.8, 117.7, 123.5, 123.8, 124.9, 129.9, 132.3, 132.3, 133.1, 133.4, 143.3, 148.9, 157.3, 163.2.

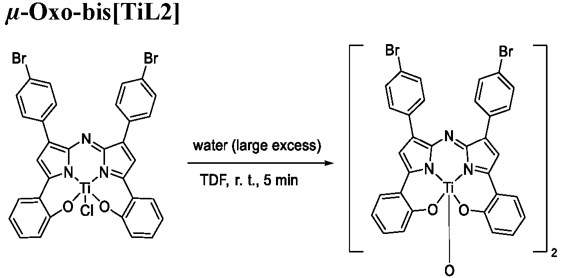

In the glovebox, **[Ti(L2)Cl]** (5 mg, 9 µmol, 1 equiv.) was dissolved in 0.5 mL of dry TDF in a J. Young NMR tube. A large excess of water (20 µL) was added, the initially red solution turned to brown immediately. The ¹H NMR revealed the formation of*µ*-oxo-bis[TiL2].

**¹H NMR** (500 MHz, 298 K, THF-*d₈*) δ (ppm) = 6.27 (d, ³*J* = 8.3 Hz, 4H), 6.61-6.64 (m, 4H), 6.88-6.91 (m, 4H), 6.95 (s, 4H), 7.18 (d, ³*J =* 8.3 Hz, 8H), 7.42 (d, ³*J* = 8.3 Hz, 12H); **¹³C NMR** (150 MHz, 298 K, THF-*d₈*) *δ* (ppm) = 116.6, 116.8, 120.2, 122.2, 122.9, 129.3, 131.7, 131.9, 132.1, 134.1, 139.9, 147.7, 155.4, 163.5.

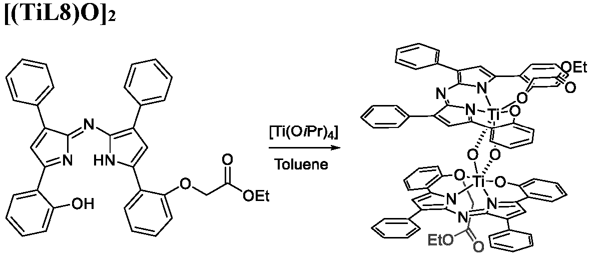

In a well-dried Schlenk tube in the glovebox, L8H₂ (100 mg, 0.176 mmol, 1 equiv.) was dissolved in toluene (5 mL). [Ti(O*i*Pr)₄] (54 µL, 0.184 mmol) was added. After 12 hours, toluene was evaporated. The ¹H NMR of the crude results in three minimum different species. Precipitation of the crude from dichloromethane in pentane affords **[(TiL8)O]₂** (20 mg, 18% yield).

**¹H NMR** (500 MHz, CD₂Cl₂) δ (ppm) = 0.64 - 0.68 (two d, *J =* 10 Hz, 6H), 4.35 (d, *J =* 16.4 Hz, 1H) 4.40 - 4.46 (m 1H), 4.52 (d, *J=* 16.4 Hz, 1H), 6.69 (s, 1H), 6.89-6.92 (m, 2H), 7.02-7.06 (m, 2H), 7.12 - 7.15 (m, 1H), 7.36 (m, 1H), 7.35 - 7.38 (m, 1H), 7.41 (s, 1H), 7.44 - 7.47 (m, 3H), 7.52-7.55 (m, 3H), 7.60 - 7.64 (m, 3H), 7.93 (broad d, ³*J* = 9.8 Hz, 1H), 8.08 (broad d, ³*J* = 8.1 Hz, 2H), 8.24 (broad d, ³*J* = 8.1 Hz, 2H) ; **¹³C NMR** (126 MHz, CD₂Cl₂) δ (ppm) = 21.3, 21.4, 69.7, 70.7, 113.8, 117.1, 117.4, 118.4, 121.0, 121.5, 124.7, 125.6, 128.4, 128.7, 128.8, 128.9, 129.0, 129.7, 130.0, 130.5, 133.0, 134.4, 134.9, 140.7, 145.6, 146.3, 150.4, 154.0, 157.1, 159.4, 163.3, 166.6 ; **HRMS (ESI)** m/z calc. for [M+H]⁺ 1287.32461; found 1287.32751; **Anal. Elem.** Calc. 6.68 N, 68.69 C, 4.32 H; found 6.24 N, 68.00 C, 4.18 H

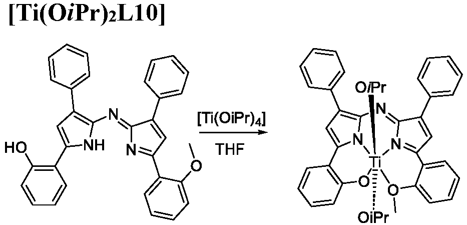

In a well pre-dried Schlenk tube and in a glovebox, **L10H₂** (50.0 mg, 0.1 mmol, 1 equiv.) was solubilized in dry THF (2 mL), followed by the addition of [Ti(O*i*Pr)₄] (29.0 mg, 0.1 mmol, 1 equiv.), resulting in change of color from blue to green. The mixture was left stirring for 2 hours at room temperature. After then, the solvents was evaporated and the powder was washed with pentane to afford pure **[Ti(O*i*Pr)₂L10]** (60 mg, 92 % yield) as a dark red powder.

**¹H NMR** (400 MHz, CD₂Cl₂) δ (ppm) = 0.82 (d, *J=* 6.1 Hz, 6H), 0.85 (d, *J=* 6.1 Hz, 6H), 3.67 (s, 3H), 4.20 - 4.30 (m, 2H), 7.00 - 7.04 (m, 2H), 7.07 (s, 1H), 7.22 - 7.27 (m, 2H), 7.33-7.47 (m, 8H), 7.54 (s, 1H), 7.95 - 7.97 (m, 1H), 7.99 - 8.01 (m, 1H), 8.09 - 8.12 (m, 4H); **¹³C NMR** (101 MHz, CD₂Cl₂) δ (ppm) = 25.4, 25.5, 60.4, 63.4, 80.9, 112.7, 115.2, 117.7, 118.7, 120.1, 121.6, 123.3, 125.8, 128.2, 128.8, 128.8, 128.9, 129.0, 129.2, 129.7, 130.1, 130.2, 132.9, 134.4, 134.9, 142.2, 146.2, 146.2, 151.7, 155.4, 160.0, 160.1 ; **HRMS (ESI)** m/z calc. for [M+OCH₃-20ⁱPr]⁺ 572.14482; found 572.14475; **Anal. Elem. Calc.** 6.32 N, 71.02 C, 5.65 H; found 6.35 N, 70.99 C, 5.58 H.

### 3.3. Indium complexes

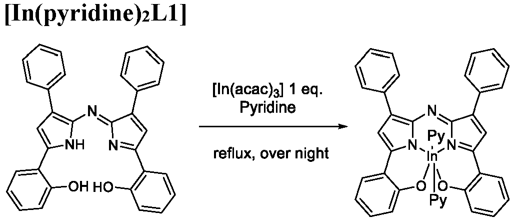

In a 25 mL round bottom flask, **L1H₃** (150 mg, 0.3 mmol, 1 equiv.) and [In(acac)₃] (acac = acetylacetonate; 130 mg, 0.3 mmol, 1 equiv.) were added in 15 mL of pyridine. The mixture was refluxed at 115 °C overnight. Upon completion, the reaction was cooled down to room temperature, and the pyridine was evaporated. The product was solubilized with a minimum of DCM, then 30 mL of hexane were added and the crude product was precipitated into the freezer for the week-end. The precipitated was filtered under vacuum and washed 4 times with hexane to isolate the corresponding **[In(pyridine)₂L1]** as a dark green solid (130 mg, 60 % yield).

**¹H NMR** (500 MHz, 298 K, DMSO-*d₆*) *δ* (ppm) = 6.63 (t, ³*J* = 8.1 Hz, 2H), 6.79 (d, ³*J* = 8.2 Hz, 2H), 7.14 (t, ³*J* = 8.5 Hz, 2H), 7.35-7.42 (m, 6), 7.63 (s, 2H), 7.86 (d, ³*J* = 8.2 Hz, 2H), 8.02 (d, ³*J* = 6.9 Hz, 4H); **¹³C NMR** (125 MHz, 298 K, DMSO-*d₆*) *δ* (ppm) = 115.5, 116.6, 118.4, 123.3, 123.9, 127.6, 128.1, 129.2, 129.9, 131.4, 134.0, 136.2, 141.7, 146.1, 149.6, 158.7, 167.3.

### 3.4. Manganese complexes

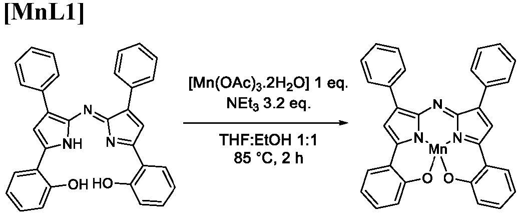

In a 25 mL round bottom flask equipped with cooler, **L1H₃** (150 mg, 0.3 mmol, 1 equiv.) and manganese(III) acetate dihydrate (70 mg, 0.3 mmol, 1 equiv.) were solubilized into 4 mL of a mix of THF:EtOH 1:1. triethylamine (0.12 mL, 0.8 mmol, 3.2 equiv.) was then added and the mixture was stirred at 85 °C for 2 hours. Upon completion, the solvent was evaporated to dryness and the product was precipited upon the addition of cold EtOH. Then the suspension was centrifuged, the supernatant was removed and this operation was repeated four times. The solid was dried under vacuum to isolate **[MnL1]** as a dark solid (140 mg, 90 % yield).

**HR-MS** (ESI): *m*/*z* calculated for C₃₂H₂₀O₂N₃⁵⁵Mn [M]^{+•} 533.09305 Da, found 533.09255 Da. **EA :** % Calculated for C₃₂H₂₀O₂N₃Mn : C, 72.05; H, 3.78; N, 7.88. Found: C, 70.55; H, 4.27; N, 7.63

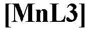

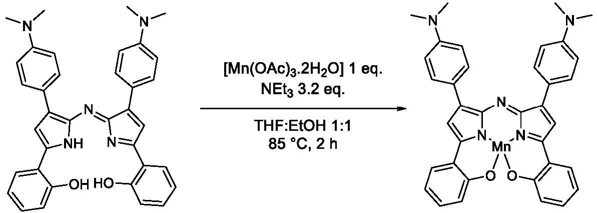

In a 25 mL round bottom flask equipped with cooler, **L3H** (150 mg, 0.3 mmol, 1 equiv.) and manganese(III) acetate dihydrate (70 mg, 0.3 mmol, 1 equiv.) were solubilized into 4 mL of a mix of THF:EtOH 1:1. Triethylamine (0.12 mL, 0.8 mmol, 3.2 equiv.) was then added and the mixture was stirred at 85 °C for 2 hours. Upon completion, the solvent was evaporated to dryness and the product was precipited upon the addition of cold EtOH. Then the suspension was centrifuged, the supernatant was removed and this operation was repeated four times. The solid was dried under vacuum to isolate the corresponding **[MnL3]** as a dark solid (140 mg, 90 % yield).

**HR-MS** (ESI) : *m*/*z* calculated for C₃₆H₃₀O₂N₅⁵⁵ Mn [M]^{+•} 619.17745 Da, found 619.17699 Da; **EA :** % Calculated for C₃₆H₃₀O₂N₅Mn : C, 69.79; H, 4.88; N, 11.3. Found: C, 63.17; H, 4.83; N, 10.39.

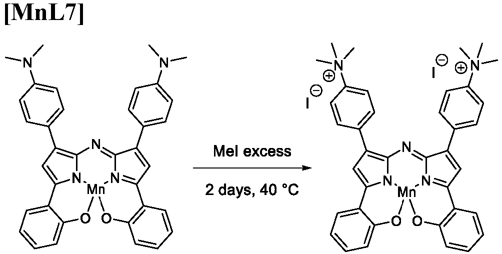

**[MnL3]** (140.0 mg, 0.2 mmol, 1 equiv.) was solubilized in iodomethane (2.5 mL, 21.2 mmol, 88 equiv.) in a 25 mL round bottom flask. The mixture was stirred at 40 °C during 2 days. The crude product was evaporated to dryness and was precipited upon the addition of EtOH. Then the suspension was centrifuged, the supernatant was removed and this operation was repeated four times. The solid was washed once with pentane and dried under vacuum to isolate **[MnL7]** as a dark green solid (190 mg, 91 % yield).

**HR-MS** (ESI): *m*/*z* calculated for C₃₈H₃₆O₂N₅⁵⁵Mn [M-2I]²⁺ 324.61193 Th, found 324.61182 Th; EA : % Calculated for C₃₈H₃₆O₂N₅Mn : C, 50.52; H, 4.02; N, 7.75. Found: C, 47.75; H, 4.08; N, 7.46.

### 3.5. Zirconium complexes

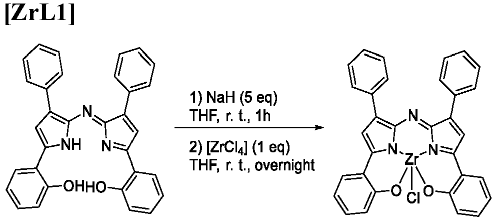

In the glovebox, **L1H₃** (41.0 mg, 0.1 mmol, 1 equiv.) and NaH (10.0 mg, 0.4 mmol, 5 equiv.) were dissolved in 4 mL of dry THF in a schlenk tube. The initially blue solution turned into green and the reaction was stirred under argon at room temperature during 1 h. In the glovebox, [ZrCl₄] (22.0 mg, 0.1 mmol, 1 equiv.) was dissolved in 4 mL of dry THF in another schlenk tube. The deprotonated ligand was added *via* a filtring cannula into the [ZrCl₄] solution. The reaction mixture was stirred at room temperature overnight. The crude product was evaporated to dryness and solubilized with DCM. The resulting solution was filtered over celite under argon to remove NaCl and the filtrate evaporated to dryness. The crude compound was precipited in a mixture of 20 mL of DCM/pentane (4:1) under argon. The supernatant was removed using filtring cannula. Pentane was added again and the supernatant removed (this operation was repeated two times). The resulting solid was then transferred into a round bottom flask and dried under vacuum to isolate the corresponding **[ZrL1]** as a black solid (40 mg, 76% yield).

**¹H NMR** (500 MHz, 298 K, DMSO-*d₆*) δ (ppm) = 6.85 (d, ³*J =* 8.2 Hz, 2H), 6.89-6.92 (m, 2H), 7.32-7.35 (m, 2H), 7.38-7.39 (m, 2H), 7.42-7.45 (m, 2H), 7.68 (s, 2H), 8.00-8.02 (m, 2H), 8.06-8.08 (m, 4H); **¹³C NMR** (125 MHz, 298 K, DMSO-*d₆*) *δ* (ppm) = 115.4, 119.0, 119.3, 122.0, 128.1, 128.3, 128.5, 129.2, 132.0, 133.6, 142.8, 146.5, 156.6, 161.3; **HR-MS** in MeOH (ESI): *m*/*z* calculated for C₃₂H₂₀ClN₃O₂Zr [M-Cl+MeOH]⁺ 606.14025 Da, found 606.14106 Da.

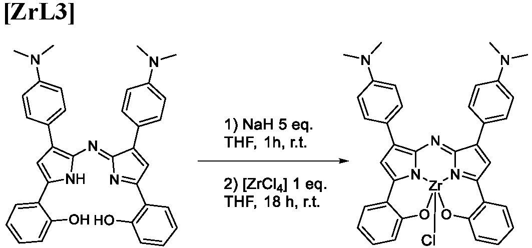

In the glovebox, **L3H** (150.0 mg, 0.3 mmol, 1 equiv.) and sodium hydride (32 mg, 1.5 mmol, 5 equiv.) were dissolved in 5 mL of dry THF in a schlenk tube. The initial blue solution turned into green and H₂ gassing occurred. The reaction was stirred under argon at room temperature for 1 hour. In the glovebox, [ZrCl₄] (62 mg, 0.3 mmol, 1 equiv.) was dissolved in 2 mL of dry THF in an another schlenk tube. Then, the deprotonated ligand was transferred, using a filtering cannula, on the [ZrCl₄] solution. The reaction was stirred over night at room temperature. The crude product was evaporated to dryness under reduce pressure and solubilized with DCM. The solution was filtered over celite to remove NaCl salts and evaporated to dryness. The compound was precipited upon the addition of pentane and the supernatant was removed (this operation was repeated three times). The solid was transferred into a round bottom flask and dried under vacuum to isolate **[ZrL3]** as a dark purple solid (170 mg, 90 % yield).

**¹H NMR** (500 MHz, 298 K, DMSO-*d₆*) *δ* (ppm) = 3.01 (s, 12H), 6.78-6.81 (m, 6H), 6.87 (t, ³*J* = 7.6 Hz, 2H), 7.29 (t, ³*J* = 7.6 Hz, 2H), 7.43 (s, 2H), 7.95 (d, ³*J* = 8.1 Hz, 2H, 8.00 (d, ³*J* = 8.7 Hz, 4H); **¹³C NMR** (125 MHz, 298 K, DMSO-*d₆*) *δ* (ppm) = 40.0, 111.8, 111.8, 118.8, 119.1, 121.7, 122.2, 128.2, 130.4, 131.4, 143.3, 146.3, 150.1, 155.9, 160.9; **HR-MS** in MeOH (ESI): *m*/*z* calculated for C₃₇H₃₄O₃N₅⁹⁰Zr [M-Cl+QCH₃+H]⁺ 686.17032 Da, found 686.17048 Da; **Analytical HPLC:** t_{R} = 5.8 min (85 % purity).

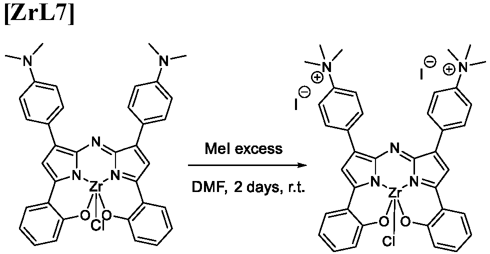

**[ZrL3]** (50.0 mg, 0.1 mmol, 1 equiv.) was solubilized in 0.5 mL of dry DMF and iodomethane (1.5 mL, 24.3 mmol, 350 equiv.) in a 10 mL round bottom flask. The mixture was stirred at room temperature during 2 days. The crude product was evaporated to dryness and was precipited upon the addition of DCM. Then the suspension was centrifuged, the supernatant was removed and this operation was repeated four times. The solid was dried under vacuum to isolate the corresponding **[ZrL7]** as a green solid (65 mg, 90 % yield).

**¹H NMR** (499 MHz, 298 K, DMSO-*d₆*) *δ* (ppm) = 3.73 (s, 18H), 6.89 (d, ³*J* = 8.2 Hz, 2H), 6.95 (t, ³*J* = 7.5 Hz, 2H), 7.38 (t, ³*J* = 7.8 Hz, 2H), 7.88 (s, 2H), 8.05 (d, ³*J* = 8.0 Hz, 2H), 8.17 (d, ³*J* = 8.6 Hz, 4H), 8.27 (d, ³*J* = 8.6 Hz, 4H); **HR-MS** in MeOH (ESI) : *m*/*z* calculated for C₃₉H₃₉O₃N₅⁹⁰Zr² [M-2I-Cl+CH₃O]²⁺ 357.60445 Da, found 357.60449 Da; Analytical **HPLC** : t_{R} = 4.5 min (90 % purity).

### 3.6. Zinc complexes

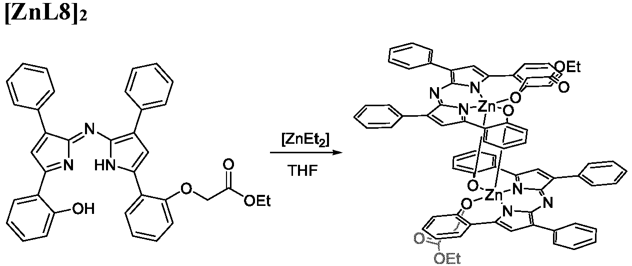

In a well-dried Schlenk tube in the glovebox, **L8H₂** (60 mg, 0.1 mmol, 1 equiv.) was dissolved in THF (3 mL). Diethyl zinc (0.1 mL, 0.1 mmol, 1.1 equiv.) was added. Bronze glittery precipitate was formed after 12 hours of the reaction. The solvent was then evaporated and the crude was washed with pentane extensively to afford the desired **[ZnL8]₂** (50 mg, 75% yield).

**¹H NMR** (500 MHz, THF-d₈) δ (ppm) = 1.01 (broad s, 3H), 3.86 (broad s, 2H), 5.10 (broad s, 2H), 6.50 (broad s, 1H), 6.63 (broad s, 1H), 7.04-7.40 (m, 11H), 7.58 (s, 1H), 7.68 (broad s, 1H), 7.86 (broad s, 1H), 8.06 (d, 3J= 7.8 Hz, 2H), 8.20 (d, ³*J* = 7.8 Hz, 2H); **HRMS (ESI)** m/z calc. for [M]⁺ 1258.25806; found 1258.25814; **Anal. Elem.** Calc. 6.66 N, 68.52 C, 4.31 H; found 6.44 N, 66.25 C, 4.32 H

### 3.7. Cobalt complexes

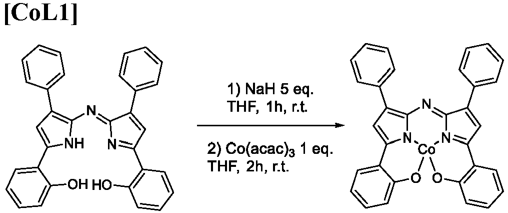

In the glovebox, **L1H₃** (30.0 mg, 0.1 mmol, 1 equiv.) and sodium hydride (7.0 mg, 0.3 mmol, 5 equiv.) were dissolved in 2 mL of dry THF in a schlenk tube. The initial blue solution turned into green and H₂ gassing occurred. The reaction was stirred under argon at room temperature for 1 hour. [Co(acac)₃] (62.0 mg, 0.4 mmol, 1 equiv.) was dissolved in 5 mL of dry THF in an another schlenk tube. Then, the deprotonated ligand was transfered, using a filtering cannula, on the [Co(acac)₃] solution. The reaction was stirred 24 h at room temperature. The crude product was concentrated under reduce pressure, filtered over celite to remove NaCl salts and evaporated to dryness. The compound was precipited upon the addition of pentane and the supernatant was removed (this operation was repeated three times). The solid was transferred into a round bottom flask and dried under vacuum to isolate the corresponding **[CoL1]** as a black solid (20 mg, 60 % yield).

**HR-MS** (ESI) : *m*/*z* calculated for C₃₂H₂₀O₂N₃⁵⁹Co [M]^{+•} 537.088020 Da, found 537.08811 Da.

### 3.8. Copper complexes

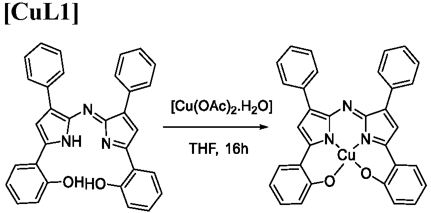

In a solution of azadipyrromethene (100 mg, 0.2 mmol, 1 éq) in THF (10 mL), [Cu(OAc)₂H₂O] (41.5 mg, 0.2 mmol, 1 equiv.) was added. The reaction mixture was stirred at room temperature overnight, then concentrated under vacuum. The resulting crude was solubilized in DCM (10 mL) and filtered over celite. Solvent was removed to obtain **[CuL1]** as a black solid (89.7 mg, 79% yield).

**UV-vis absorption** in DMSO: λₘₐₓ = 781 nm; **Emission** in DMSO: λₑₘ = 810 nm (λₑₓ = 750 nm)

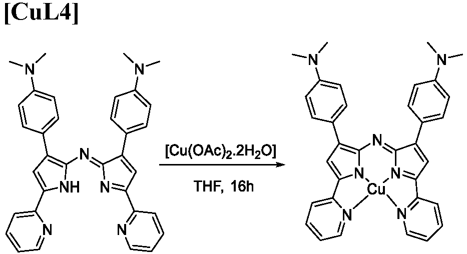

In a solution **of L4H** (20 mg, 0.1 mmol, 1 equiv.) in THF (2 mL), [Cu(OAc)₂H₂O] (7.4 mg, 0.1 mmol, 1 equiv.) was added. The reaction mixture was stirred at room temperature overnight, then concentrated under vacuum. The resulting crude was solubilized in DCM (10 mL) and filtered over celite. Solvent was removed to obtain **[CuL4]** as a black solid (15 mg, 68% yield).

**UV-vis absorption** in DMSO: λₘₐₓ = 742 nm

### 3.9. Aluminum complexes

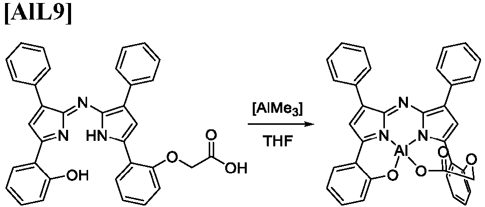

In a Schlenk tube and in a glove box, **L9H₃** (50 mg, 0.1 mmol, 1 equiv.) was dissolved in 5 mL THF, followed by the addition of trimethyl aluminum (47 µL, 0.1 mmol, 1 equiv.). The suspension was left stirring for 12 hours until the mixture become homogenous. Then volatiles were evaporated and the resulting dark blue powder was washed extensively with pentane to afford **[AlL9]** (48 mg, 92% yield).

**¹H NMR** (500 MHz, TDF-d₈) δ (ppm) =4.44 (d, ²*J* = 13.4 Hz, 1H), 5.32 (d, 2*J* = 13.6 Hz, 1H), 6.70 (t, ³*J* = 6.9 Hz, 1H), 6.81 (d, ³*J* = 8.4 Hz, 1H), 7.25 - 7.29 (m, 2H), 7.35 - 7.45 (m, 8H), 7.58 (d, *3J=* 7.9 Hz, 1H), 7.73 (s, 1H), 7.86 (d, ³*J* = 8.1 Hz, 1H), 7.99 (d, ³*J* = 7.8 Hz, 1H), 8.07 (d, ³*J* = 8.1 Hz, 2H), 8.19 (d, ³*J* = 6.9 Hz, 2H) ; **¹³C NMR** (126 MHz, THF) δ (ppm) = 79.6, 114.2, 117.5, 118.4, 119.9, 122.9, 123.1, 126.1, 127.7, 128.1, 128.9, 129.1, 129.6, 129.8, 130.3, 130.6, 130.7, 130.7, 134.3, 135.3, 135.9, 141.0, 146.9, 147.2, 147.4, 151.5, 165.3 ; **²⁷Al NMR** (130 MHz, THF) δ (ppm) = 103.4

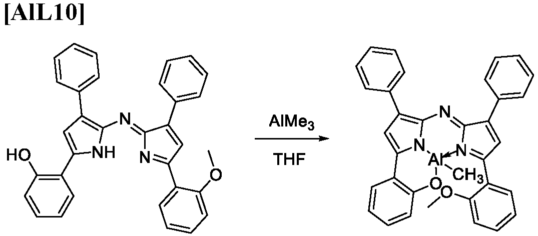

In a Schlenk tube and in a glovebox, **L10H₂** (50 mg, 0.1 mmol, 1 equiv.) was solubilized in dry THF (2 mL), followed by the addition of trimethyl aluminum (51 µL, 0.1 mmol, 1 equiv.), resulting in change of color from blue to green and the release of methane gas. The mixture was left stirring for 2 hours at room temperature. After then, the solvent was evaporated and the powder was washed with pentane to afford pure [AlL10] (50 mg, 99% yield) as a dark red powder.

**¹H NMR** (500 MHz, THF-*d₈*) δ (ppm) = -1.14 (s, 3H), 4.44 (s, 3H), 6.90 (ddd, ³*J* = 8.1 Hz, ³*J=* 7 Hz, *⁴J* = 1.2 Hz, 1H), 7.03 (dd, ³*J* = 8.4 Hz, *⁴J* = 1.2 Hz, 1H), 7.24 (s, 2H), 7.31-7.50 (m, 11H), 7.80 (dd, *3J=* 8.0 Hz, ⁴*J* = 1.7 Hz, 1H), 7.89 (dd, ³*J* = 7.8 Hz, ⁴*J* = 1.5 Hz, 1H), 8.05 - 8.07 (m, 2H), 8.17 - 8.19 (m, 2H) ; **¹³C NMR** (126 MHz, CD₂Cl₂) δ (ppm) = 64.8, 114.6, 117.7, 118.4, 118.5, 118.6, 122.7, 123.9, 125.8, 128.3, 128.8, 128.9, 129.2, 129.5, 129.5, 130.0, 130.0, 130.8, 133.4, 134.9, 134.9, 141.9, 146.7, 147.9, 150.5, 151.0, 155.1, 163.8, 164.2 ; **HRMS (ESI)** m/z calc. for [M-CH₃+THF]⁺ 592,21753; found 592,21887 ; **Anal. Elem.** Calc. 7.85 N, 76.25 C, 4.89 H; found 7.69 N, 74.43 C, 4.99 H.

### 3.10. Gallium complexes

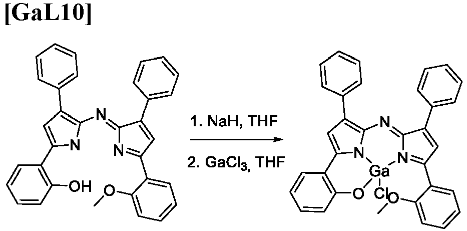

The **[ScL1]** was synthesized following a two steps synthesis:
**Firt step:** In a glove box, NaH (25 mg, 1 mmol, 4.8 equiv.) was mixed in THF (4 mL) and added to a Schlenk fetched with **L10H₂** (100 mg, 0.207 mmol, 1 equiv.). After 2 hours, the mixture was filtered on celite and the collected solution was collected. Evaporation of THF followed by washing the powder with pentane and dichloromethane afford the salts of **L10** (100 mg, 90% yield). The purity of the product was verified by NMR techniques and the product was used directly for the complexation.

**¹H NMR** (500 MHz, THF-*d₈*) δ (ppm) = 4.03 (s, 3H), 6.16 (t, *J=* 7.3 Hz, 1H), 6.51 (d, *J =* 8.5 Hz, 1H), 6.87 (t, *J =* 7.7 Hz, 1H), 6.95 (t, *J =* 7.3 Hz, 1H), 7.07 (s, 1H), 7.07 (broad t, *J* = 7.5 Hz, 1H), 7.12-7.27 (m, 7H), 7.47 (s, 1H), 7.59 (broad d, *J=* 8.0 Hz, 1H), 7.83 (broad d, *J=* 7.8 Hz, 1H), 7.96 (broad d, *J=* 7.8 Hz, 2H), 8.10 (broad d, *J=* 7.7 Hz, 2H) ; **¹³C NMR** (126 MHz, TDF) δ (ppm) = 57.3, 110.5, 113.2, 114.6, 120.7, 121.8, 122.0, 125.3, 125.5, 127.2, 127.6, 128.1, 128.2, 128.5, 130.0, 130.2, 130.4, 130.8, 131.5, 136.7, 138.9, 139.3, 145.8, 151.0, 152.9, 155.9, 157.4, 168.0, 175.9.

**Second step:** In a glovebox, [GaCl₃] (16.3 mg, 0.1 mmol, 1 equiv.) was mixed in THF (2 mL) and transferred to a Schlenk tube already filled with **the previous salt** (50 mg, 0.1 mmol, 1 equiv.). After stirring for one night, the crude was filtered and the collected solvent was evaporated. The powder was then washed with pentane to afford **Ga1** (50 mg, 90% yield).

**¹H NMR** (400 MHz, THF-*d₈*) δ (ppm) = 4.49 (s, 3H); 6.86 (broad t, ³*J =* 8.1 Hz, 1H), 7.04 (broad d, ³*J =* 8.4 Hz, 1H), 7.24 - 7.27 (m, 1H), 7.32 - 7.37 (m, 2H), 7.38-7.44 (m, 6H), 7.46 - 7.49 (m, 1H), 7.54 (d, ³*J* = 9.8 Hz, 1H), 7.69 (s, 1H), 7.87 - 789 (m, 1H), 7.97 - 7.99 (m, 1H), 8.04 (d, ³*J* = 7.0 Hz, 2H), 8.17 (d, ³*J* = 9.8 Hz, 2H) ; **¹³C NMR** (101 MHz, CD₂Cl₂) δ (ppm) = 64.4, 115.7, 117.0, 117.1, 118.5, 119.5, 122.4, 123.5, 125.2, 128.8, 128.9, 129.0, 129.7, 130.0, 130.1, 130.2, 130.2, 131.7, 132.9, 134.3, 135.3, 143.0, 146.4, 147.2, 156.6, 156.6, 159.3, 159.4, 165.0 ; **HRMS (ESI)** m/z calc. for [M+THF]⁺ 634.16157; found 634.16180

### Example 2: Photocatalysis

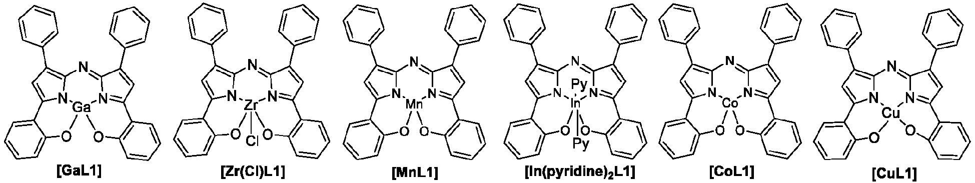

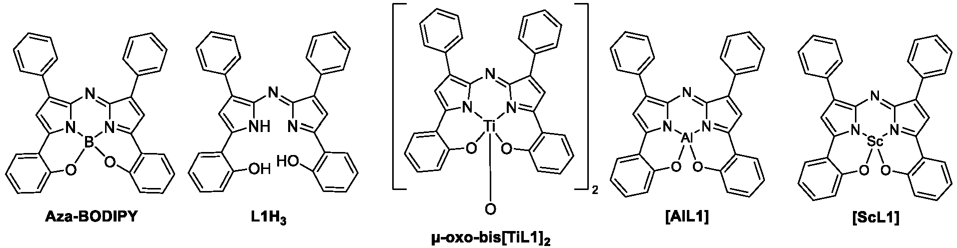

### 1. Benzylamine oxidation

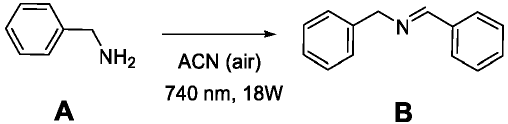

In a tube under air, distillated benzylamine (22 µL, 0.2 mmol, 1.0 equiv.), AzaMDIPY (0.01 mmol, 0.05 equiv, 5 mol%) and acetonitrile (3 mL) are added. The resulting reaction mixture was stirred at room temperature under red light (740 nm, 18W). Then, solvent was evaporated under reduce pressure and the conversion was estimated by ¹H NMR. Results are reported in the following table:

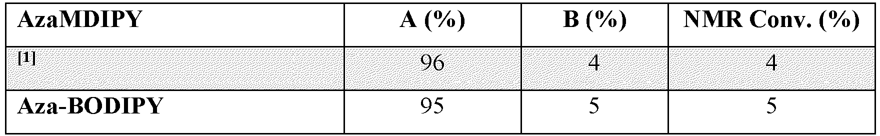

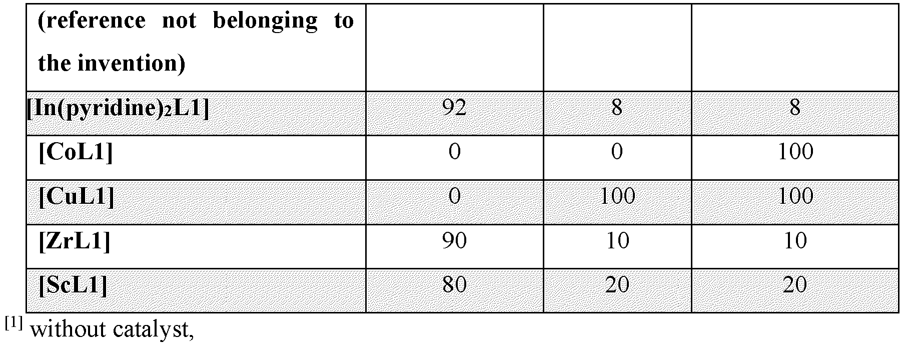

### 4.2. Boronic acid oxidation into phenol

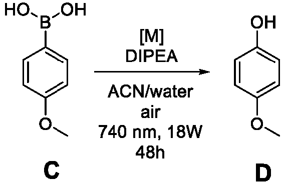

In a tube under air, 4-methoxyboronic acid (30.4 mg, 0.2 mmol, 1.0 equiv.), diisopropylethylamine DIPEA (0.174 mL, 1.00 mmol, 5.0 equiv.), AzaMDIPY (0.01 mmol, 0.05 equiv., 5 mol%), acetonitrile (2.5 mL) and water (0.5 mL) are added. The reaction mixture was stirred at room temperature under red light (740 nm, 18W). Then, the solvent was evaporated under reduce pressure and the conversion was estimated by ¹H NMR. Results are reported in the following table:

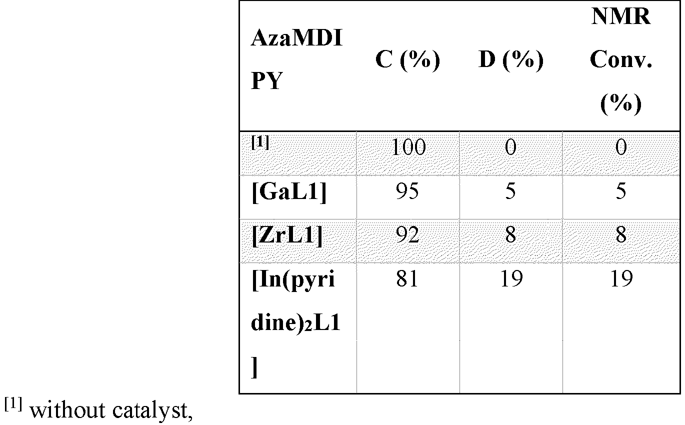

## Claims

1. A compound of following formula (I): 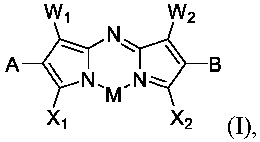 wherein:
M is a metal chosen from transition metals, post-transition metals and lanthanides, M being different from bore;
A and B are independently chosen from:
- H,
- halogens, in particular F, Cl, Br and I,
- CF₃,
- linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
- linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
- linear, branched and cyclic (C₂-C₁₂)-alkenyl groups, OR, wherein R is chosen from hydrogen, linear, branched and cyclic (C₁-C₁₂)-alkyl groups, in particular Me, and (hetero)aryl groups, in particular phenyl,
- NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
- Aryl and heteroaryl groups, said groups being optionally substituted by at least one R₁ group chosen from:
o halogens, in particular F, Cl, Br and I,
o CF₃,
o N₃,
o OR, wherein R is chosen from linear, branched and cyclic (C₁-C₁₂)-alkyl groups, in particular Me, and CH₂-COORₐ, wherein Rₐ is chosen from hydrogen, linear, branched and cyclic (C₁-C₁₂)-alkyl groups, and (hetero)aryl groups, in particular phenyl,
o linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
o NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
o COO⁻ and COOR, wherein R is chosen from hydrogen, linear, branched and cyclic (C₁-C₁₂)-alkyl groups, and (hetero)aryl groups, in particular phenyl,
o P⁺RₐR_{b}R_{c}, P(=O)(ORₐ)(OR_{b}), P(=O)(ORₐ)(O⁻), and PO₃²⁻, wherein Rₐ, R_{b} and R_{c} are independently chosen from hydrogen, linear, branched and cyclic (C₁-C₁₂)-alkyl groups, and (hetero)aryl groups, in particular phenyl,
o N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
o SO₃H or SO₃⁻;
W₁ and W₂ are independently chosen from:
- linear, branched and cyclic (C₁-C₁₂)-alkyl groups, in particular Me,
- linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
- linear, branched and cyclic (C₂-C₁₂)-alkenyl groups, Aryl and heteroaryl groups, said groups being optionally substituted by at least one R₁ group chosen from:
o linear, branched and cyclic (C₁-C₁₂)-alkyl groups,
o halogens, in particular F, Cl, Br and I,
o CF₃,
∘ N₃,
o OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
o linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
o NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o CH₂-E, said group being in particular a phenyl group, more particularly a phenyl substituted by a R₁ group in para, wherein E is a group chosen from:
▪ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
▪ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
▪ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
▪ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
▪ C≡CRₐ, wherein Rₐ is chosen from hydrogen, linear, branched and cyclic (C₁-C₁₂)-alkyl groups, and (hetero)aryl groups, in particular phenyl,
▪ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
▪ PRₐR_{b} wherein Rₐ and R_{b} are independently chosen from hydrogen, linear, branched and cyclic (C₁-C₁₂)-alkyl groups, and (hetero)aryl groups, in particular phenyl,
▪ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
▪ COO⁻ and COOH,
▪ OH or O⁻,
▪ SO₃H or SO₃⁻,
said optionally substituted heteroaryl being for example a pyridinium;
X₁ and X₂ are independently chosen from;
- Aryl groups,
- Aryl groups being substituted, in particular at least in ortho or meta, by at least one R₂ group chosen from:
o OH or O⁻ group,
o C≡CRₐ, wherein Rₐ is chosen from hydrogen, linear, branched and cyclic (C₁-C₁₂)-alkyl groups, and (hetero)aryl groups, in particular phenyl,
o CF₃,
∘ N₃,
o OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
o linear, branched and cyclic (C₁-C₁₂)-alkyl groups, in particular Me, interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
o SH or S⁻ group,
o NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o COO⁻ and COOR, wherein R is chosen from hydrogen, linear, branched and cyclic (C₁-C₁₂)-alkyl groups, and (hetero)aryl groups, in particular phenyl, R being in particular hydrogen,
o CONRₐR_{b}, wherein Rₐ and R_{b} are independently chosen from hydrogen, linear, branched and cyclic (C₁-C₁₂)-alkyl groups, and (hetero)aryl groups, in particular phenyl,
o PRₐR_{b}, wherein Rₐ and R_{b} are independently chosen from hydrogen, linear, branched and cyclic (C₁-C₁₂)-alkyl groups, and (hetero)aryl groups, in particular phenyl,
o P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
o P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
o CH=N-NH₂, and CH=N-NHR', wherein R' is chosen from linear, branched and cyclic (C₁-C₁₂)-alkyl groups, C(=S)NH₂ and C(=O)NH₂,
o SO₃H or SO₃⁻,
- Heteroaryl groups, for example pyridine, pyrrole, thiazole, triazole, imidazole or thiophene, being optionally substituted, in particular at least in alpha or beta with the carbon of X₁ or X₂ that is bound to the rest of the compound of formula (I), by at least one R₂ group chosen from:
o linear, branched and cyclic (C₁-C₁₂)-alkyl groups,
o OH or O⁻ group,
o C≡CRₐ, wherein Rₐ is chosen from hydrogen, linear, branched and cyclic (C₁-C₁₂)-alkyl groups, and (hetero)aryl groups, in particular phenyl,
o CF₃,
∘ N₃,
o OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
o linear, branched and cyclic (C₁-C₁₂)-alkyl groups, in particular Me, interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
o SH or S⁻ group,
o NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o COO⁻ and COOR, wherein R is chosen from hydrogen, linear, branched and cyclic (C₁-C₁₂)-alkyl groups, and (hetero)aryl groups, in particular phenyl, R being in particular hydrogen,
o CH₂-COO⁻ and CH₂-COOR, wherein R is chosen from hydrogen, linear, branched and cyclic (C₁-C₁₂)-alkyl groups, and (hetero)aryl groups, in particular phenyl, R being in particular hydrogen, said group being for example pyrrolyl being N-substituted by CH₂-COO^{- or} CH₂-COOH,
o PRₐR_{b}, wherein Rₐ and R_{b} are independently chosen from hydrogen, linear, branched and cyclic (C₁-C₁₂)-alkyl groups, and (hetero)aryl groups, in particular phenyl,
o P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
o P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
o CH=N-NH₂, and CH=N-NHR', wherein R' is chosen from linear, branched and cyclic (C₁-C₁₂)-alkyl groups, C(=S)NH₂ and C(=O)NH₂,
o SO₃H or SO₃⁻,
said optionally substituted heteroaryl being for example a pyridinium,
said heteroaryl groups being in particular heteroaryl groups, more particularly unsubstituted heteroaryl groups, comprising at least one N, O or S atom which is in alpha with the carbon of X₁ or X₂ that is bound to the rest of the compound of formula (I), said heteroaryl being for example a 2-pyridyl group,
- C(Q₁)(Q₂)-Q, wherein:
o Q is (CH₂)ₙ-Q', wherein n is 0, 1 or 2, and Q' is chosen from X₁ as defined above, in particular pyridinyl, C(=O)H, C(=O)Rₐ, COORₐ and CONRₐR_{b}, wherein Rₐ and R_{b} are independently chosen from hydrogen, linear, branched and cyclic (C₁-C₁₂)-alkyl groups, and (hetero)aryl groups, in particular phenyl,
o Q₁ and Q₂ are chosen from linear, branched and cyclic (C₁-C₁₂)-alkyl groups, aryl groups, halogens, in particular F, and Q as defined above, at least one of Q₁ and Q₂ being chosen from linear, branched and cyclic (C₁-C₁₂)-alkyl groups, aryl groups, and halogens, in particular F,
or A and W₁, and/or B and W₂ form together a fused arene, in particular a fused benzene, said arene being optionally substituted as defined above about W₁ and/or W₂,
or A and Xi, and/or B and X₂ form together a fused arene, in particular a fused phenanthrene, said arene being optionally substituted as defined above about X₁ and/or X₂,
with the proviso that:
- At least one of X₁ and X₂ is a substituted aryl at least in ortho by at least one R₂ group as defined above, or a heteroaryl group comprising at least one N, O or S atom which is adjacent to the carbon of X₁ or X₂ that is bound to the rest of the compound of formula (I), and
- When X₁ and X₂ are both 2-pyrrolyl, 2-thiophenyl, or 5-oxazolyl, at least one of W₁ and W₂ is not alkyl;
said compound of formula (I) being different from: 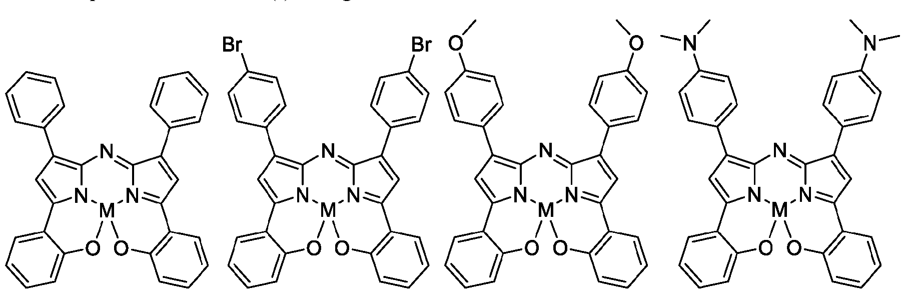
with M being Al or Ga; 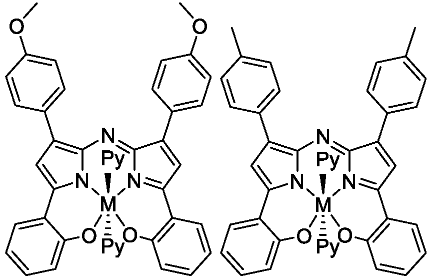
with M being Al, Ga or In,
and

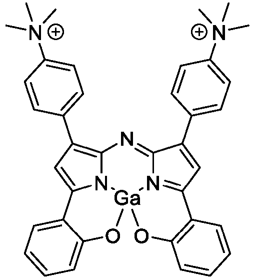

2. The compound according to claim 1, wherein A and B are H.

3. The compound according to anyone of the preceding claims, wherein W₁ and W₂ are independently chosen from aryl and heteroaryl groups, said groups being optionally substituted by at least one R₁ as defined in claim 1, in particular at least in para position.

4. The compound according to anyone of the preceding claims, wherein X₁ and X₂ are independently chosen from aryl groups being substituted, at least in ortho, by at least one R₂ group as defined in claim 1, and heteroaryl groups optionally substituted as defined in claim 1, comprising at least one N, O or S atom which is adjacent to the carbon of X₁ or X₂ that is bound to the rest of the compound of formula (I), said heteroaryl being for example a 2-pyridyl group.

5. The compound according to anyone of the preceding claims, wherein M is chosen from transition metals and post-transition metals, in particular from transition metals.

6. The compound according to anyone of the preceding claims, wherein M is chosen from Co, Cu, Ru, Pd, Ir, Au, In, Ga, Ti, Zr, Mn, Zn, Pt, Os, and Al.

7. The compound according to anyone of the preceding claims, wherein M is not Al Ga, or In.

8. The compound according to anyone of the preceding claims, wherein the coordination sphere of M is not completed with a ligand being pyridine.

9. The compound according to anyone of the preceding claims, wherein W₁ and W₂ are not both Ph or substituted Ph, in particular in para, with R₁ being OMe, NMe₂, or Me.

10. The compound according to anyone of the preceding claims, wherein X₁ and X₂ are not both Ph substituted, in particular in ortho, with OH or O-.

11. Use as a photocatalyst of a compound of following formula (II): 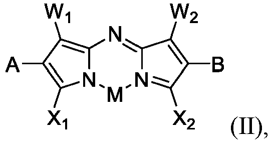 wherein:
M is a metal chosen from transition metals, post-transition metals and lanthanides, M being different from bore;
A and B are independently chosen from:
- H,
- halogens, in particular F, Cl, Br and I,
- CF₃,
- linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
- linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
- linear, branched and cyclic (C₂-C₁₂)-alkenyl groups, OR, wherein R is chosen from hydrogen, linear, branched and cyclic (C₁-C₁₂)-alkyl groups, in particular Me, and (hetero)aryl groups, in particular phenyl,
- NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
- Aryl and heteroaryl groups, said groups being optionally substituted by at least one R₁ group chosen from:
o halogens, in particular F, Cl, Br and I,
o CF₃,
∘ N₃,
o OR, wherein R is chosen from linear, branched and cyclic (C₁-C₁₂)-alkyl groups, in particular Me, and CH₂-COORₐ, wherein Rₐ is chosen from hydrogen, linear, branched and cyclic (C₁-C₁₂)-alkyl groups, and (hetero)aryl groups, in particular phenyl,
o linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
o NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
o COO⁻ and COOR, wherein R is chosen from hydrogen, linear, branched and cyclic (C₁-C₁₂)-alkyl groups, and (hetero)aryl groups, in particular phenyl,
o P⁺RₐR_{b}R_{c}, P(=O)(ORₐ)(OR_{b}), P(=O)(ORₐ)(O⁻), and PO₃²⁻, wherein Rₐ, R_{b} and R_{c} are independently chosen from hydrogen, linear, branched and cyclic (C₁-C₁₂)-alkyl groups, and (hetero)aryl groups, in particular phenyl,
o N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
o SO₃H or SO₃⁻;
W₁ and W₂ are independently chosen from:
- linear, branched and cyclic (C₁-C₁₂)-alkyl groups, in particular Me,
- linear, branched and cyclic (C₂-C₁₂)-alkynyl groups, optionally substituted by a NRₐR_{b} or N⁺RₐR_{b}R_{c} group, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole; said group being for example a dialkylpropargylamine or a trialkylpropargylammonium,
- linear, branched and cyclic (C₂-C₁₂)-alkenyl groups, Aryl and heteroaryl groups, said groups being optionally substituted by at least one R₁ group chosen from:
o linear, branched and cyclic (C₁-C₁₂)-alkyl groups,
o halogens, in particular F, Cl, Br and I,
o CF₃,
∘ N₃,
o OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
o linear, branched and cyclic (C₁-C₁₂)-alkyl groups, in particular Me, possibly interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
o NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
o C≡CRₐ, wherein Rₐ is chosen from hydrogen, linear, branched and cyclic (C₁-C₁₂)-alkyl groups, and (hetero)aryl groups, in particular phenyl,
o N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
o PRₐR_{b} wherein Rₐ and R_{b} are independently chosen from hydrogen, linear, branched and cyclic (C₁-C₁₂)-alkyl groups, and (hetero)aryl groups, in particular phenyl,
o P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
o COO⁻ and COOH,
o OH or O⁻,
o SO₃H or SO₃⁻,
o CH₂-E, said group being in particular a phenyl group, more particularly a phenyl substituted by a R₁ group in para, wherein E is a group chosen from:
▪ NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
▪ N⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
▪ S⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
▪ P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
▪ C≡CRₐ, wherein Rₐ is chosen from hydrogen, linear, branched and cyclic (C₁-C₁₂)-alkyl groups, and (hetero)aryl groups, in particular phenyl,
▪ N=CRₐR_{b} and CRₐ=NR_{b}, wherein Rₐ and R_{b} are independently chosen from hydrogen, linear, branched and cyclic (C₁-C₁₂)-alkyl groups, and (hetero)aryl groups, in particular phenyl,
▪ PRₐR_{b} wherein Rₐ and R_{b} are independently chosen from hydrogen, linear, branched and cyclic (C₁-C₁₂)-alkyl groups, and (hetero)aryl groups, in particular phenyl,
▪ P⁺RₐR_{b}R_{c} wherein Rₐ, R_{b} and R_{c} are independently chosen from hydrogen, linear, branched and cyclic (C₁-C₁₂)-alkyl groups, and (hetero)aryl groups, in particular phenyl,
▪ COO⁻ and COOH,
▪ OH or O',
▪ SO₃H or SO₃⁻,
said optionally substituted heteroaryl being for example a pyridinium;
X₁ and X₂ are independently chosen from;
- Aryl groups,
- Aryl groups being substituted, in particular at least in ortho or meta, by at least one R₂ group chosen from:
o OH or O⁻ group,
o C≡CRₐ, wherein Rₐ is chosen from hydrogen, linear, branched and cyclic (C₁-C₁₂)-alkyl groups, and (hetero)aryl groups, in particular phenyl,
o CF₃,
∘ N₃,
o OR, wherein R is chosen from linear, branched and cyclic (C₁-C₁₂)-alkyl groups, in particular Me, and (hetero)aryl groups, in particular phenyl, and CH₂-COORₐ, wherein Rₐ is chosen from hydrogen, linear, branched and cyclic (C₁-C₁₂)-alkyl groups, and (hetero)aryl groups, in particular phenyl,
o linear, branched and cyclic (C₁-C₁₂)-alkyl groups, in particular Me, interrupted by at least one -O- or -NR- atom, wherein R is chosen from hydrogen, linear, branched and cyclic (C₁-C₁₂)-alkyl groups, in particular Me,, and (hetero)aryl groups, in particular phenyl,
o SH or S⁻ group,
o NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o COO⁻ and COOR, wherein R is chosen from hydrogen, linear, branched and cyclic (C₁-C₁₂)-alkyl groups, and (hetero)aryl groups, in particular phenyl, R being in particular hydrogen,
o CONRₐR_{b}, wherein Rₐ and R_{b} are independently chosen from hydrogen, linear, branched and cyclic (C₁-C₁₂)-alkyl groups, and (hetero)aryl groups, in particular phenyl,
o PRₐR_{b}, wherein Rₐ and R_{b} are independently chosen from hydrogen, linear, branched and cyclic (C₁-C₁₂)-alkyl groups, and (hetero)aryl groups, in particular phenyl,
o P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
o P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
o CH=N-NH₂, and CH=N-NHR', wherein R' is chosen from linear, branched and cyclic (C₁-C₁₂)-alkyl groups, C(=S)NH₂ and C(=O)NH₂,
o SO₃H or SO₃⁻,
- Heteroaryl groups, for example pyridine, pyrrole, thiazole, triazole, imidazole or thiophene, being optionally substituted, in particular at least in alpha or beta with the carbon of X₁ or X₂ that is bound to the rest of the compound of formula (I), by at least one R₂ group chosen from:
o linear, branched and cyclic (C₁-C₁₂)-alkyl groups,
o OH or O⁻ group,
o C≡CRₐ, wherein Rₐ is chosen from hydrogen, linear, branched and cyclic (C₁-C₁₂)-alkyl groups, and (hetero)aryl groups, in particular phenyl,
o CF₃,
∘ N₃,
o OR, wherein R is chosen from linear, branched and cyclic (C₁-C₁₂)-alkyl groups, in particular Me, and (hetero)aryl groups, in particular phenyl,and CH₂-COORₐ, wherein Rₐ is chosen from hydrogen, linear, branched and cyclic (C₁-C₁₂)-alkyl groups, and (hetero)aryl groups, in particular phenyl,
o linear, branched and cyclic (C₁-C₁₂)-alkyl groups, in particular Me, interrupted by at least one -O- or -NR- atom, wherein R is chosen from hydrogen, linear, branched and cyclic (C₁-C₁₂)-alkyl groups, in particular Me, and (hetero)aryl groups, in particular phenyl,
o SH or S⁻ group,
o NRₐR_{b}, wherein Rₐ and R_{b} are independently chosen from hydrogen, linear, branched and cyclic (C₁-C₁₂)-alkyl groups, and (hetero)aryl groups, in particular phenyl, or Rₐ and R_{b} form together an heteroarene, in particular a carbazole,
o COO⁻ and COOR, wherein R is chosen from hydrogen, linear, branched and cyclic (C₁-C₁₂)-alkyl groups, and (hetero)aryl groups, in particular phenyl, R being in particular hydrogen,
o CH₂-COO⁻ and CH₂-COOR, wherein R is chosen from hydrogen, linear, branched and cyclic (C₁-C₁₂)-alkyl groups, and (hetero)aryl groups, in particular phenyl, R being in particular hydrogen, said group being for example pyrrolyl being N-substituted by CH₂-COO^{- or} CH₂-COOH,
o PRₐR_{b}, wherein Rₐ and R_{b} are independently chosen from hydrogen, linear, branched and cyclic (C₁-C₁₂)-alkyl groups, and (hetero)aryl groups, in particular phenyl,
o P⁺RₐR_{b}R_{c}, wherein Rₐ, R_{b} and R_{c} are independently chosen from hydrogen, linear, branched and cyclic (C₁-C₁₂)-alkyl groups, and (hetero)aryl groups, in particular phenyl,
o P(=O)(ORₐ)(OR_{b}), P(=O)(ORₐ)(O⁻), and PO₃²⁻, wherein Rₐ and R_{b} are independently chosen from hydrogen, linear, branched and cyclic (C₁-C₁₂)-alkyl groups, and (hetero)aryl groups, in particular phenyl,
o CH=N-NH₂, and CH=N-NHR', wherein R' is chosen from linear, branched and cyclic (C₁-C₁₂)-alkyl groups, C(=S)NH₂ and C(=O)NH₂,
o SO₃H or SO_{3'},
said optionally substituted heteroaryl being for example a pyridinium,
said heteroaryl groups being in particular heteroaryl groups, more particularly unsubstituted heteroaryl groups, comprising at least one N, O or S atom which is in alpha with the carbon of X₁ or X₂ that is bound to the rest of the compound of formula (I), said heteroaryl being for example a 2-pyridyl group,
- C(Q₁)(Q₂)-Q, wherein:
o Q is (CH₂)ₙ-Q', wherein n is 0, 1 or 2, and Q' is chosen from X₁ as defined above, in particular pyridinyl, C(=O)H, C(=O)Rₐ, COORₐ and CONRₐR_{b}, wherein Rₐ and R_{b} are independently chosen from hydrogen, linear, branched and cyclic (C₁-C₁₂)-alkyl groups, and (hetero)aryl groups, in particular phenyl,
o Q₁ and Q₂ are chosen from linear, branched and cyclic (C₁-C₁₂)-alkyl groups, aryl groups, halogens, in particular F, and Q as defined above, at least one of Q₁ and Q₂ being chosen from linear, branched and cyclic (C₁-C₁₂)-alkyl groups, aryl groups, and halogens, in particular F,
or A and W₁, and/or B and W₂ form together a fused arene, in particular a fused benzene, said arene being optionally substituted as defined above about W₁ and/or W₂,
or A and Xi, and/or B and X₂ form together a fused arene, in particular a fused phenanthrene, said arene being optionally substituted as defined above about X₁ and/or X₂,

12. Process of photocatalysis comprising a step of irradiation of a reaction mixture comprising a compound of formula (II) as defined in claim 11.

13. Process according to claim 12, wherein the irradiation is performed with red and/or near infrared light, in particular with a wavelength from 620 to 2000 nm, more particularly from 650 to 810 nm.
